(19) Europäisches Patentamt
European Patent Office
Office européen des brevets

(11) **EP 0 528 094 B1**

(12) **EUROPÄISCHE PATENTSCHRIFT**

(45) Veröffentlichungstag und Bekanntmachung des Hinweises auf die Patenterteilung:
**15.10.1997 Patentblatt 1997/42**

(51) Int Cl.$^6$: **H04N 1/46**

(21) Anmeldenummer: **91810662.6**

(22) Anmeldetag: **20.08.1991**

(54) **Verfahren und Vorrichtung zur Ermittlung von Rasterprozentwerten**

Method and apparatus for obtaining half-tone dot percentages

Procédé pour obtenir les données relatives au pourcentage des points de trame

(84) Benannte Vertragsstaaten:
**CH DE FR GB IT LI**

(43) Veröffentlichungstag der Anmeldung:
**24.02.1993 Patentblatt 1993/08**

(73) Patentinhaber: **GRETAG Aktiengesellschaft CH-8105 Regensdorf (CH)**

(72) Erfinder:
• **Zimmermann, Bruno CH-8002 Zürich (CH)**

• **Ott, Hans CH-8105 Regensdorf (CH)**
• **Senn, Thomas CH-8106 Adlikon bei Regensdorf (CH)**

(74) Vertreter: **Schwabe - Sandmair - Marx Stuntzstrasse 16 81677 München (DE)**

(56) Entgegenhaltungen:
**EP-A- 0 144 188       WO-A-90/00267**
**GB-A- 2 053 619**

## Beschreibung

Die Erfindung betrifft ein Verfahren und eine Vorrichtung zur Ermittlung der für die Erzielung eines vorgegebenen Soll-Farborts erforderlichen Rasterprozentwerte der einzelnen Druckfarben im autotypischen Mehrfarbendruck, insbesondere im Vierfarben-Offsetdruck, gemäss dem Oberbegriff des Patentanspruchs 1 beziehungsweise des Patentanspruchs 20.

Eine der grundlegenden Aufgaben in der Reproduktions- und Druckpraxis besteht darin, eine bestimmte Farbe mit einem vorgegebenen Farbort exakt nachzustellen, d.h. drucktechnisch wiederzugeben und die dazu erforderlichen Flächenbedeckungen oder Rasterprozentwerte der einzelnen Druckfarben in den dem Reproduktionsverfahren zugrundeliegenden Rasterfilmen oder Druckplatten zu ermitteln. Üblicherweise bedient man sich dazu eines sogenannten Farbatlas, der eine Vielzahl von Farbfeldern bekannter abgestufter Rasterprozentwerte der einzelnen Druckfarben umfasst. Die nachzustellende Farbe wird mit den Farbfeldern des Farbatlas visuell verglichen und das im Idealfall mit der nachzustellenden Farbe übereinstimmende oder dieser am nächsten kommende Farbfeld liefert dann die gewünschten Rasterprozentwerte.

Voraussetzung für die Zuverlässigkeit dieser Methode ist, dass der Farbatlas eine sehr grosse Anzahl von Farbfeldern in möglichst kleinen Abstufungen enthält, und dass der Farbatlas unter denselben Reproduktionsbedingungen hergestellt worden ist, wie sie für die nachzustellende Farbe vorgesehen sind. Im Offsetdruck gehören dazu unter anderem die verwendeten Druckfarben, die verschiedenen Rasterformen und -anordnungen, das Substrat (Papier), auf das gedruckt wird, und die Druckkennlinien der eingesetzten Druckmaschine, etc. Dies bedingt, dass ein Repro-Betrieb eine grössere Zahl verschiedener und extrem umfangreicher Farbatlanten erstellen muss, was sehr aufwendig ist. Ausserdem wird die Benützung verschiedener und umfangreicher Farbatlanten vielfach als umständlich und zeitraubend empfunden. Weniger umfangreiche Farbatlanten erfordern eine schwierige und nur von erfahrenem Personal einigermassen zuverlässig durchzuführende visuelle Interpolation.

Es sind auch schon sogenannte elektronische Farbatlas-Systeme bekannt geworden, bei denen die Rasterprozentzahlen und die Farbkoordinaten der Farbfelder eines körperlichen Farbatlas in tabellarischer Form in einem Rechner gespeichert sind. Die Farbkoordinaten der nachzustellenden Farbe werden mittels eines Farbmessgeräts bestimmt und in den Rechner eingegeben, worauf dieser die zu den eingegebenen Farbkoordinaten passenden Rasterprozentzahlen aus der abgespeicherten Tabelle entnimmt. Durch speziell entwickelte Interpolationsverfahren und Transformationsalgorithmen zwischen Farbraum und Flächenbedeckungsraum können auch Zwischenwerte ermittelt werden, wobei die Schwierigkeiten der visuellen Interpolation vermieden werden und in der Regel mit weniger Stützstellen (Farbfeldern) ausgekommen werden kann. Das grundsätzliche Problem, dass der Farbatlas streng genommen nur für die ihm zugrundeliegende spezielle Druckbedingung Gültigkeit hat, ist jedoch auch bei diesem System nicht behoben.

Eine weitere Schwierigkeit ergibt sich beim Standard-Vierfarbendruck, wo üblicherweise ein bestimmter Anteil der Buntfarben Cyan, Magenta und Gelb durch die Druckfarbe Schwarz ersetzt wird. Viele Farbatlanten enthalten diese Druckfarbe überhaupt nicht oder nur in beschränktem Umfang, und für den Repro-Fachmann ist es durch visuellen Vergleich sehr schwierig zu entscheiden, welches der geeignetste oder möglicherweise der einzig richtige Schwarzanteil ist. Die bekannten elektronischen Farbatlas-Systeme bieten für dieses Problem ebenfalls keine in der Praxis befriedigende Lösung.

Durch die Erfindung sollen ein Verfahren und eine Vorrichtung der gattungsgemässen Art dahingehend verbessert werden, dass sie mit einem extrem wenige Farbfelder umfassenden und dementsprechend einfach herstellbaren und praxistauglichen Farbatlas auskommen. Ferner soll dabei auch die Voraussetzung dafür geschaffen werden, dass auch bei unterschiedlichen Druckbedingungen insgesamt weniger verschiedene Farbatlanten erforderlich sind. Schliesslich soll die Grundlage für die Lösung des Problems der Bestimmung des Schwarzanteils im Vierfarbendruck geschaffen werden.

Das dieser Problemstellung gerecht werdende erfindungsgemässe Verfahren und die entsprechende erfindungsgemässe Vorrichtung sind durch die Merkmale der unabhängigen Ansprüche gekennzeichnet. Bevorzugte Ausbildungsformen und Weiterbildungen sind in den abhängigen Ansprüchen beschrieben.

Das Gewicht, mit dem die gespeicherten Farbkoordinaten der einzelnen Farbfelder in die Ausgleichsrechnung eingehen, wird vorzugsweise gemäss der Formel $G_i = 1/(\Delta E_i)_g$ gewählt, worin $G_i$ das jeweilige Gewicht und $\Delta E_i$ der Farbabstand des jeweiligen Farbfelds vom Soll-Farbort ist und worin g einen empirischen Exponenten im Bereich von 0,5 bis 7, vorzugsweise von 1 bis 3 bedeutet.

Gemäss einer weiteren vorteilhaften Ausgestaltung wird das Verfahren so geführt, dass bei der Ausgleichsrechnung für die Berechnung der neuen Farbkoordinaten und zugeordneten neuen Rasterprozentwerte der Zusammenhang der gespeicherten Farbkoordinaten mit den gespeicherten Rasterprozentwerten der Farbfelder in der Umgebung des vorgewählten Rasterprozentwerts der ausgewählten Druckfarbe durch Näherungsfunktionen in der Weise angenähert wird, dass gegenüber dem vorgewählten Rasterprozentwert der ausgewählten Druckfarbe eine grössere Differenz aufweisende gespeicherte Rasterprozentwerte mit einem geringeren Gewicht berücksichtigt werden als solche mit einer kleineren Differenz.

Eine besonders zweckmässige Weiterbildung des Verfahren zeichnet sich dadurch aus, dass im Vierfarbendruck der zu ermittelnde Rasterprozentwert einer ausgewählten Druckfarbe, insbesondere Schwarz, vorgewählt wird und dass die zu ermittelnden Rasterprozentwerte der übrigen drei Druckfarben unter Berücksichtigung des vorgewählten Rasterprozentwerts der ausgewählten Druckfarbe bestimmt werden. Dabei wird vorzugsweise so vorgegangen, dass aus den gespeicherten Farbkoordinaten und Rasterprozentwerten der Farbfelder und aus dem vorgewählten Rasterprozentwert der ausgewählten Druckfarbe nach einer vorzugsweise abstandsgewichteten Ausgleichsrechnungsmethode neue Farbkoordinaten und zugeordnete neue Rasterprozentwerte so berechnet werden, dass sämtliche zugeordneten neuen Rasterprozentwerte der ausgewählten Druckfarbe gleich dem vorgewählten Rasterprozentwert sind, und dass die zu ermittelnden Rasterprozentwerte der übrigen drei Druckfarben aus den neuen Farbkoordinaten und neuen Rasterprozentwerten berechnet werden. Insbesondere wird dabei der zu ermittelnde Rasterprozentwert der ausgewählten Druckfarbe als variabler Parameter vorgewählt und zur Erfüllung einer zusätzlichen Nebenbedingung variiert, wobei die zu ermittelnden Rasterprozentwerte der übrigen drei Druckfarben solange jeweils für einen neuen Variationswert des vorgewählten Rasterprozentwerts der ausgewählten Druckfarbe berechnet werden, bis die zusätzliche Nebenbedingung erfüllt ist. Vorzugsweise wird das Verfahren so geführt, dass der zu ermittelnde Rasterprozentwert der ausgewählten Druckfarbe als maximal oder minimal vorgewählt wird, wobei die Bestimmung der zu ermittelnden Rasterprozentwerte der übrigen drei Druckfarben ausgehend von einem Startwert für den zu ermittelnden Rasterprozentwert der ausgewählten Druckfarbe für verschiedene Werte des zu ermittelnden Rasterprozentwerts der ausgewählten Druckfarbe solange wiederholt wird, bis der zu ermittelnde Rasterprozentwert der ausgewählten Druckfarbe einen Endwert erreicht hat, bei dessen Über- beziehungsweise Unterschreitung wenigstens einer der zu ermittelnden Rasterprozentwerte der übrigen drei Druckfarben ausserhalb eines zulässigen Wertebereichs liegen würde. Eine weitere vorteilhafte Ausgestaltung zeichnet sich dadurch aus, dass der zu ermittelnde Rasterprozentwert der ausgewählten Druckfarbe nach Massgabe einer definierten Schwarz-Aufbau-Methode vorgewählt wird.

Gemäss einer weiteren bevorzugten Ausführungsform werden Metamerie-Effekte dadurch berücksichtigt, dass für die Farbfelder des Farbatlas separate Sätze von Farbkoordinaten für unterschiedliche Lichtarten bestimmt werden, dass die zu ermittelnden Rasterprozentwerte der einzelnen Druckfarben anhand eines der separaten Sätze von Farbkoordinaten berechnet werden, dass aus den berechneten Rasterprozentwerten die zugehörigen Farbkoordinaten für die übrigen Lichtarten berechnet werden und dass als zusätzliche Nebenbedingung gefordert wird, dass der durch die Summe der ggf. gewichteten Farbabstände der durch die so berechneten Farbkoordinaten der übrigen Lichtarten definierten Farborte zu den Soll-Farborten der jeweiligen Lichtart ausgedrückte Metamerie-Effekt minimal ist.

Eine Anpassung an geänderte Tonwertzunahmen lässt sich gemäss einer weiteren vorteilhaften Ausführungsform dadurch erreichen, dass die ermittelten Rasterprozentwerte der einzelnen Druckfarben entsprechend den den Zusammenhang zwischen nominellen Rasterprozentwerten und Tonwertzunahmen darstellenden Druckkennlinien der für den Druck vorgesehenen Druckmaschine korrigiert werden.

Vorteilhafterweise wird eine Anpassung an eine Aenderung des Druck-Substrats dadurch vorgenommen, dass bei der Bestimmung der Farbkoordinaten der Farbfelder des Farbatlas eine allfällige Abweichung des ersten Substrats, auf dem der Farbatlas gedruckt ist, vom zweiten Substrat, auf dem der vorgegebene Farbort gedruckt werden soll, mitberücksichtigt wird. Dabei wird zweckmässigerweise so vorgegangen, dass die Farbkoordinaten der Farbfelder des Farbatlas aus den Remissionsspektren der Farbfelder bestimmt werden und dass jeder spektrale Remissionswert der Remissionsspektren mit dem Quotienten aus dem spektralen Remissionswert des zweiten Substrats und dem spektralen Remissionswert des ersten Substrats bei der jeweiligen Wellenlänge mulitipliziert wird. Alternativ wird dies auch dadurch erreicht, dass die Farbkoordinaten der Farbfelder des Farbatlas aus den Remissionsspektren der Farbfelder und den daraus gemäss CIE berechneten Normfarbwerten berechnet werden und dass jeder Normfarbwert mit dem Quotienten aus dem betreffenden Normfarbwert des zweiten Substrats und dem betreffenden Normfarbwert des ersten Substrats multipliziert wird.

Eine besonders zweckmässige Anpassung des Verfahrens an geänderte Druckbedingungen wird vorteilhafterweise dadurch erzielt, dass unter typischen Druckbedingungen ein typischer Farbatlas mit einer ersten Anzahl von Farbfeldern erstellt, die Farbkoordinaten seiner Farbfelder bestimmt und zusammen mit den zugeordneten bekannten Rasterprozentwerten der einzelnen Druckfarben gespeichert werden, dass unter den zum Druck des vorgegebenen Soll-Farborts vorgesehenen aktuellen Druckbedingungen ein Vergleichsfarbatlas mit einer zweiten Anzahl von Farbfeldern bekannter abgestufter Rasterprozentwerte der einzelnen Druckfarben erstellt und die Farbkoordinaten seiner Farbfelder bestimmt werden, wobei die zweite Anzahl kleiner ist als die erste Anzahl, dass aus dem typischen Farbatlas und dem Vergleichsfarbatlas ein den aktuellen Druckbedingungen angepasster aktueller Farbatlas mit einer der ersten Anzahl gleichen dritten Anzahl von Farbfeldern berechnet wird, und dass die Ermittlung der erforderlichen Rasterprozentwerte anhand des aktuellen Farbatlas erfolgt. Dabei wird vorzugsweise so verfahren, dass aus dem typischen Farbatlas und dem Vergleichsfarbatlas ein Differenzfarbatlas mit einer der ersten Anzahl gleichen vierten Anzahl von Farbfeldern berechnet wird, und dass zur Berechnung des aktuellen Farbatlas der Differenzfarbatlas dem typischen Farbatlas überlagert wird.

Als Farbkoordinaten werden vorzugsweise die L*,a*,b*-Koordinaten oder L*,u*,v*-Koordinaten gemäss CIE verwendet. Vorzugsweise wird ein Farbatlas verwendet, dessen Farbfelder für jede Druckfarbe in 3-10, vorzugsweise 4-6, insbesondere 4-5 verschiedene Rasterprozentwerte abgestuft sind.

Im folgenden wird die Erfindung anhand der Zeichnung näher erläutert. Es zeigen:

Fig. 1       eine schematische Darstellung einer erfindungsgemässen Vorrichtung,

Fig. 2       ein Flussdiagramm der den zentralen Kern des erfindungsgemässen Verfahrens bildenden Rezepturberechnung,

Fig. 3       ein Flussdiagramm des Gesamt-Verfahrens in einer ersten Variante,

Fig. 4       ein Flussdiagramm der wesentlichen Teile einer zweiten Verfahrensvariante,

Fig. 5       ein Flussdiagramm einer weiteren Verfahrensvariante,

Fig. 6       ein Flussdiagramm der einzelnen Schritte des Korrekturverfahrens,

Fig. 7       ein Flussdiagramm der einzelnen Schritte der Aktualisierung des Farbatlas und

Fig. 8a-8e    Diagramme zur Erläuterung der Schritte gemäss Fig. 7.

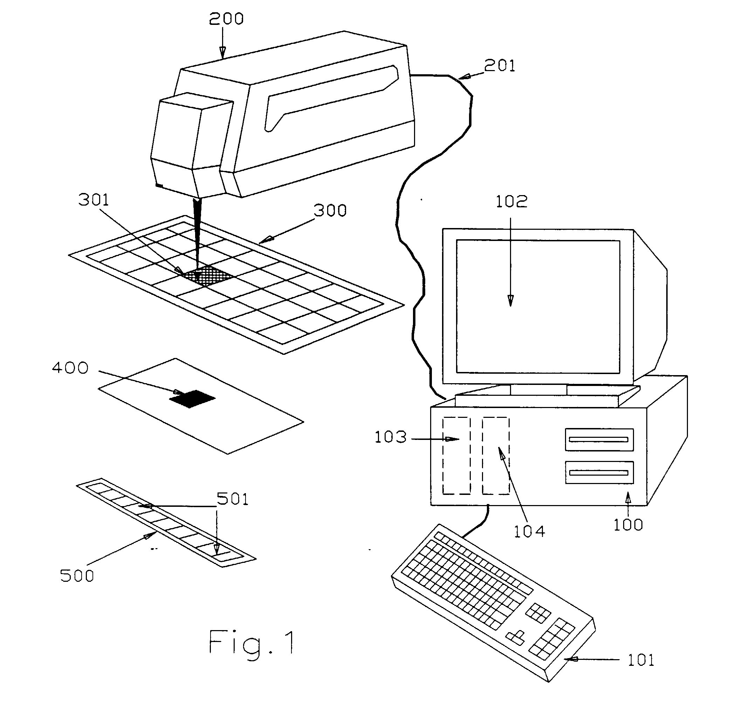

Die erfindungsgemässe Vorrichtung besteht gemäss Fig. 1 aus einem Rechner 100, der mit einer Bedienungstastatur 101 und einem Datenausgabegerät in Form eines Video-Monitors 102 sowie einem nur strichliert angedeuteten Programmspeicher 103 und einem ebensolchen Arbeitsspeicher 104 ausgestattet ist, und einem fotometrischen Messgerät in Form eines Spektralfotometers 200. Beim Rechner 100 handelt es sich um eine Standard-Personal-Computer-Konfiguration z.B. der AT-Klasse oder der 386-er Klasse. Das Spektralfotometer 200 ist beispielsweise das Gerät SPM 100 der Firma GRETAG AG, Regensdorf, Schweiz. Das Spektralfotometer 200 ist mit einer seriellen Schnittstelle ausgestattet und über ein Kabel 201 an den Rechner 100 angeschlossen. Es gestattet die Aufnahme von Remissionsspektren von Messobjekten unter den in der grafischen Industrie genormten Beleuchtungsbedingungen und u.a. die Berechnung von Farbkoordinaten aus den Remissionsspektren gemäss den einschlägigen Normen z.B. der CIE (Commission Internationale de l'Eclairage). Das Spektralfotometer 200 wird von Hand auf dem Messobjekt positioniert. Die Messung kann von Hand oder vom Rechner 100 ausgelöst werden, ebenso der Transfer der Messdaten - entweder der Remissionsspektren selbst oder der daraus berechneten Farbkoordinaten des Messobjekts - in den Rechner 100. Mit einem externen Rechner verbundene und von diesem gesteuerte Spektralfotometer sind an sich bekannt und bedürfen deshalb hinsichtlich ihres allgemeinen Aufbaus und ihrer allgemeinen, prinzipiellen Funktionsweise keiner weiteren Erläuterung.

Im Programmspeicher 103 des Rechners 100 ist ein Programm gespeichert, das den Rechner zur Durchführung der im folgenden näher beschriebenen Schritte des erfindungsgemässen Verfahrens befähigt. Wie bei jedem Personal Computer kann das Programm selbstverständlich auch nur vorübergehend gespeichert sein. Dasselbe gilt auch für gespeicherte und/oder berechnete Daten.

Grundlage des erfindungsgemässen Verfahrens ist ein unter typischen Druckbedingungen erstellter körperlicher Farbatlas 300 in Form eines einzelnen mit Farbfeldern bedruckten Blatts. Unter typischen Druckbedingungen werden z.B. die Standard-Druckbedingungen gemäss FOGRA/UGRA verstanden. Zu den Druckbedingungen gehören im Offsetdruck u.a. die Druckkennlinien der verwendeten Druckmaschine, die eingesetzten Drucktinten, die Form und die Anordnung der Rasterpunkte, das Papier oder allgemein Substrat, auf das gedruckt wird, etc.

Der Farbatlas 300 umfasst eine Anzahl von Farbfeldern 301 bekannter abgestufter nomineller Flächenbedeckungen bzw. nomineller Rasterprozentwerte aller Druckfarben, beim Standard-Vierfarbendruck also die Druckfarben Cyan, Magenta, Gelb und Schwarz. Jedes Farbfeld 301 vermittelt einen bestimmten visuellen Farbeindruck, der sich durch einen Satz von Farbkoordinaten in einem gegebenen Farbraum quantifizierten lässt. Im folgenden werden unter Farbkoordinaten beispielsweise immer die unter einer ausgewählten genormten Lichtart bestimmten $L^*,a^*,b^*$-Koordinaten gemäss CIE verstanden, es sind jedoch auch andere Farbkoordinaten, beispielsweise etwa die $L^*,u^*,v^*$-Koordinaten nach CIE geeignet. Ferner wird im folgenden zur Vereinfachung der Schreibweise das *-Zeichen bei den Farbkoordinaten weggelassen. Unter nominellen Flächenbedeckungen bzw. Rasterprozentwerten werden diejenigen der dem Druck zugrundeliegenden Rasterfilme bzw. Druckplatten verstanden. Die realen bzw. tatsächlichen Rasterprozentwerte der gedruckten Farbfelder sind aufgrund der durch die Druckkennlinien der verwendeten Druckmaschine beschriebenen Tonwertzunahmen bzw. Rasterpunktvergrösserungen im allgemeinen etwas höher.

Die Rasterprozentwerte der Farbfelder umfassen für jede Druckfarbe zwischen 3 und 10 Abstufungen. Gemäss einem Aspekt der Erfindung sind pro Druckfarbe nur 3-6 Abstufungen vorgesehen, vorzugsweise nur 4-5. Im folgenden Ausführungsbeispiel wird von 4 Abstufungen pro Druckfarbe ausgegangen.

Die erfindungsgemässe Beschränkung auf nur relativ wenige Abstufungen der einzelnen Rasterprozentwerte erlaubt einen handlichen, auf einem einzigen Blatt unterzubringenden Farbatlas, der in der täglichen Praxis einfach und problemlos einzusetzen ist. Ausserdem ist seine Herstellung wenig aufwendig. Die Beschränkung auf nur relativ wenige Farbfelder macht aber besondere Massnahmen bei der rechnerischen Auswertung erforderlich, die im folgenden noch im Detail beschrieben werden.

Als erster, vorbereitender Schritt wird der körperliche Farbatlas 300 in den Rechner 100 eingelesen und dort als elektronischer Farbatlas in tabellarischer Form gespeichert. Dazu wird mittels des Spektralfotometers 200 jedes einzelne Farbfeld 301 ausgemessen und das dabei aufgenommene Remissionsspektrum in den Rechner 100 übertragen. Alternativ können auch die Farbkoordinaten L,a,b der Farbfelder im Spektralfotometer errechnet und in den Rechner übertragen werden. Wie sich aus dem folgenden noch ergibt, ist es jedoch vorteilhaft, wenn im Rechner auch die Remissionsspektren der Farbfelder zur Verfügung stehen. Aus den übernommenen Remissionsspektren bestimmt der Rechner für jedes Farbfeld die Farbkoordinaten L,a,b und speichert diese zusammen mit den zum jeweils betreffenden Farbfeld gehörenden nominellen Rasterprozentwerten der einzelnen Druckfarben in zugeordneter Form im Arbeitsspeicher 104 ab. Die Rasterprozentwerte der Farbfelder können z.B. über die Bedienungstastatur 101 eingegeben werden. Die Berechnung der Farbkoordinaten aus den Remissionsspektren erfolgt in an sich bekannter Weise nach den genormten Formeln der CIE.

Wenn dieser Vorgang abgeschlossen ist, ist im Rechner ein elektronischer Farbatlas gespeichert, dessen einzelne Farbfelder je durch ein Quadrupel von gespeicherten Rasterprozentwerten für die vier Druckfarben Cyan, Magenta, Gelb und Schwarz sowie durch ein Tripel von gespeicherten Farbkoordinaten L, a und b beschrieben sind. Die Gesamtheit der je sieben gespeicherten Zahlenwerte sämtlicher Farbfelder bildet das elektronische oder gespeicherte Aequivalent des körperlichen Farbatlas 300. Die einzelnen Farbfelder sind durch die genannten jeweils sieben Zahlenwerte beschrieben und werden im folgenden auch als Stützstellen bezeichnet. Ferner wird im folgenden, wo eine Verwechslung ausgeschlossen ist, die genannte Gesamtheit der gespeicherten Farbkoordinaten und Rasterprozentwerte als (gespeicherter) Farbatlas bezeichnet.

Der körperliche und dementsprechend auch der gespeicherte Farbatlas umfasst im vorliegenden Beispiel 256 Farbfelder, die sich aus jeweils vier Abstufungen der Rasterprozentwerte in den einzelnen Druckfarben ergeben. Die Abstufungen sind im Beispiel für alle Druckfarben gleich gewählt und betragen beispielsweise 0 %, 33 %, 66 % und 100 %. Selbstverständlich sind auch andere Abstufungen möglich. Entsprechend umfasst der gespeicherte Farbatlas 256 Stützstellen mit je sieben zugeordneten Zahlenwerten. Die Erstellung des gespeicherten Farbatlas braucht selbstverständlich nur einmal zu erfolgen, er bleibt bei geeigneter Speicherung ja erhalten.

Bei der Berechnung des Farbatlas werden eventuell noch Anpassungen an geänderte Druckbedingungen vorgenommen oder der Farbatlas wird unter Verwendung eines Vergleichsfarbatlas in einen aktuellen Farbatlas umgerechnet. Diese Schritte bleiben jedoch vorläufig ausser Betracht und werden weiter unten noch im Detail beschrieben.

Als nächster Schritt werden die Farbkoordinaten der gewünschten zu druckenden Farbe, deren erforderliche Rasterprozentwerte zu bestimmen sind, in den Rechner eingegeben.

Dies erfolgt entweder durch unmittelbare Eingabe der Farbkoordinaten über die Bedienungstastatur 101 oder durch Ausmessen eines Farbmusters bzw. einer Farbvorlage 400 mittels des Spektralfotometers 200 und Uebertragung der Messdaten in den Rechner 100. Die Farbkoordinaten können dabei wieder entweder im Spektralfotometer 200 selbst oder erst im Rechner 100 anhand des gemessenen Remissionsspektrums ermittelt werden. Die Farbkoordinaten der zu druckenden Farbe (Soll-Farbort) werden im folgenden als Soll-Farbkoordinaten bezeichnet.

Bis hierher entspricht das erfindungsgemässe Verfahren abgesehen von der speziellen Ausbildung des Farbatlas mit nur relativ wenigen Farbfeldern im wesentlichen den bekannten Verfahren mit elektronischen Farbatlas-Systemen. Die charakteristischen Merkmale des erfindungsgemässen Verfahrens kommen erst in den hier anschliessenden Verfahrensschritten zum Ausdruck.

Der erste wesentliche Aspekt des erfindungsgemässen Verfahrens besteht darin, die Anzahl der für alle weiteren Berechnungen zu berücksichtigenden Stützstellen des Farbatlas durch Vorwahl des gesuchten Rasterprozentwens einer beliebig ausgewählten Druckfarbe zu reduzieren. In der Regel ist diese ausgewählte Druckfarbe die Farbe Schwarz, aufgrund der Symmetrie des Verfahrenskonzepts ist jedoch auch jede andere der vier Druckfarben dafür geeignet. Konkret geschieht dies dadurch, dass aus den 256 Stützstellen 64 neue Stützstellen berechnet werden, deren Rasterprozentwert in der ausgewählten Druckfarbe den vorgewählten Wert $K_v$ hat. Im Detail wird dies mittels einer abstandsgewichteten Ausgleichsrechnung durchgeführt, bei der die Zusammenhänge zwischen den drei gespeicherten Farbkoordinaten der Stützstellen mit den zugeordneten gespeicherten Rasterprozentwerten jeweils in der Umgebung des vorgewählten Rasterprozentwerts $K_v$ der ausgewählten Druckfarbe durch Näherungsfunktionen approximiert werden, wobei diejenigen Stützstellen, deren Rasterprozentwert in der ausgewählten Druckfarbe eine grössere Differenz zum vorgewählten Rasterprozentwert $K_v$ der ausgewählten Druckfarbe aufweist, mit einem geringeren Gewicht in die Ausgleichsrechnung einbezogen werden als Stützstellen mit einer kleineren Differenz.

In der hier eindimensionalen, d.h. nur auf die eine ausgewählte Druckfarbe bezogenen Ausgleichsrechnung werden die Näherungsfunktionen beispielsweise als Polynome zweiten Grades angesetzt, also

$$L_i = C_{0,L} + C_{1,L} \cdot K_i + C_{2,L} \cdot K_i^2$$

$$a_i = C_{0,a} + C_{1,a} \cdot K_i + C_{2,a} \cdot K_i^2$$

$$b_i = C_{0,b} + C_{1,b} \cdot K_i + C_{2,b} \cdot K_i^2$$

Darin geht der Index i entsprechend den (hier 4) Abstufungen der ausgewählten Druckfarbe Schwarz von 1 bis 4, bedeuten $L_i$, $a_i$ und $b_i$ die gespeicherten Farbkoordinaten der vier Farbfelder oder Stützstellen, die sich nur durch die Rasterprozentwerte $K_i$ in der ausgewählten Druckfarbe (hier Schwarz) unterscheiden und deren gespeicherte Rasterprozentwerte bezogen auf jede der übrigen drei Druckfarben (hier Cyan, Magenta und Gelb) gleich sind, bedeuten $K_i$ die (hier vier) gespeicherten Rasterprozentwerte in der ausgewählten Druckfarbe und sind $C_{0,L}$ bis $C_{2,L}$, $C_{0,a}$ bis $C_{2,a}$ und $C_{0,b}$ bis $C_{2,b}$ die zu bestimmenden Regressionskoeffizienten.

In Matrixschreibweise lassen sich die vorstehenden, je vier Gleichungen umfassenden 3 Gleichungssysteme wie folgt ausdrücken:

$$\vec{L} = (K) \cdot \vec{C_L}$$

$$\vec{a} = (K) \cdot \vec{C_a}$$

$$\vec{b} = (K) \cdot \vec{C_b}$$

Darin bedeuten $\vec{L}$, $\vec{a}$, $\vec{b}$ die Vektoren ($L_1$ bis $L_4$), ($a_1$ bis $a_4$) und ($b_1$ bis $b_4$) und $\vec{C_L}$, $\vec{C_a}$ und $\vec{C_b}$ sind die Vektoren ($C_{0,L}$ bis $C_{2,L}$), ($C_{0,a}$ bis $C_{2,a}$) und ($C_{0,b}$ bis $C_{2,b}$). Die Matrix (K) besteht aus den Elementen

$$(K) = \begin{pmatrix} 1 & K_1 & K_1^2 \\ 1 & K_2 & K_2^2 \\ 1 & K_3 & K_3^2 \\ 1 & K_4 & K_4^2 \end{pmatrix}$$

Es wird nun eine Gewichtung durchgeführt, indem jede der vier Gleichungen der drei Gleichungssysteme mit einem Gewichtsfaktor $G_i$ multipliziert wird:

$$G_i \cdot L_i = G_i \cdot (C_{0,L} + C_{1,L} \cdot K_i + C_{2,L} \cdot K_i^2)$$

$$G_i \cdot a_i = G_i \cdot (C_{0,a} + C_{1,a} \cdot K_i + C_{2,a} \cdot K_i^2)$$

$$G_i \cdot b_i = G_i \cdot (C_{0,b} + C_{1,b} \cdot K_i + C_{2,b} \cdot K_i^2)$$

In Matrixschreibweise mit der Gewichtsmatrix

$$G = \begin{pmatrix} G_1 & 0 & 0 & 0 \\ 0 & G_2 & 0 & 0 \\ 0 & 0 & G_3 & 0 \\ 0 & 0 & 0 & G_4 \end{pmatrix}$$

ergibt dies

$$G \cdot \vec{L} = G \cdot K \cdot \overrightarrow{C_L}$$

$$G \cdot \vec{a} = G \cdot K \cdot \overrightarrow{C_a}$$

$$G \cdot \vec{b} = G \cdot K \cdot \overrightarrow{C_b}$$

beziehungsweise mit $\overrightarrow{L_g} = G \cdot \vec{L}$, $\overrightarrow{a_g} = G \cdot \vec{a}$, und $\overrightarrow{b_g} = G \cdot \vec{b}$ sowie mit $K_g = G \cdot K$:

$$\overrightarrow{L_g} = K_g \cdot \overrightarrow{C_L}$$

$$\overrightarrow{a_g} = K_g \cdot \overrightarrow{C_a}$$

$$\overrightarrow{b_g} = K_g \cdot \overrightarrow{C_b}$$

Die unbekannten Regressionskoeffizienten $\overrightarrow{C_L}$, $\overrightarrow{C_a}$ und $\overrightarrow{C_b}$ bzw. explizit $C_{0,L}$, $C_{1,L}$, $C_{2,L}$, $C_{0,a}$, $C_{1,a}$, $C_{2,a}$ und $C_{0,b}$, $C_{1,b}$, $C_{2,b}$ werden nun nach der bekannten Methode der kleinsten Fehlerquadrate gemäss den folgenden Beziehungen bestimmt:

$$\overrightarrow{C_L} = (K_g{}^T \cdot K_g)^{-1} \cdot K_g{}^T \cdot \overrightarrow{L_g}$$

$$\overrightarrow{C_a} = (K_g{}^T \cdot K_g)^{-1} \cdot K_g{}^T \cdot \overrightarrow{a_g}$$

$$\overrightarrow{C_b} = (K_g{}^T \cdot K_g)^{-1} \cdot K_g{}^T \cdot \overrightarrow{b_g}$$

Darin bedeutet $K_g{}^T$ die zu $K_g$ transponierte Matrix und $(K_g{}^T \cdot K_g)^{-1}$ die zu $(K_g{}^T \cdot K_g)$ inverse Matrix.

Mit den auf diese Weise gewonnenen Regressionskoeffizienten sind die Näherungsfunktionen für L, a und b festgelegt und die zum vorgewählten Rasterprozentwert $K_v$ der ausgewählten Druckfarbe gehörigen L, a, b-Werte lassen sich durch Einsetzen des vorgewählten Rasterprozentwerts in die Nährungsfunktionen bestimmen.

Die Gewichtsfaktoren $G_i$ werden umgekehrt proportional zur Differenz zwischen dem vorgewählten Rasterprozentwert $K_v$ und dem jeweiligen gespeicherten Rasterprozentwert $K_i$ gewählt: $G_i = 1/|K_v - K_i|$. Eventuell könnnen die Gewichtsfaktoren $G_i$ auch gemäss der Beziehung $G_i = 1/|K_v - K_i|^e$ gewählt werden, worin e ein empirisch ermittelter Exponent im Bereich von 1 bis 3 ist.

Die vorstehende Ausgleichsrechnung wird für sämtliche 4-er-Kombinationen der Stützstellen bzw. Farbfelder durchgeführt, woraus schliesslich 64 neue Stützstellen resultieren, deren Rasterprozentwert in der ausgewählten Druckfarbe den vorgewählten Rasterprozentwert $K_v$ aufweist, deren Rasterprozentwerte C, M und Y in den übrigen drei Druckfarben unverändert sind und deren zugehörige Farbkoordinaten L, a, b das Resultat der vorstehend beschriebenen Interpolation bzw. Ausgleichsrechnung sind. Die 64 neuen Stützstellen bilden einen reduzierten Farbatlas, und alle weiteren Berechnungsschritte des erfindungsgemässen Verfahrens werden nur noch mit den Daten dieser neuen 64 Stützstellen bzw. des durch diese definierten reduzienen Farbatlas durchgeführt.

Bei der Vorwahl des Rasterprozentwerts $K_v$ einer ausgewählten Druckfarbe kann der Rasterprozentwert $K_v$ entweder als fester Wert oder als variabler Parameter vorgegeben werden. Im letzteren Fall werden alle vorstehend und nachstehend im Bezug auf einen fest vorgegebenen Rasterprozentwert beschriebenen Berechnungen für jeden einzelnen Variationswert des variablen Parameters durchgeführt. Der durch die Variation des Parameters erreichte zusätzliche Freiheitsgrad kann dazu benutzt werden, eine zusätzliche Nebenbedingung zu erfüllen bzw. das Ergebnis der Berechnungen hinsichtlich einer solchen Nebenbedingung zu optimieren. Im Detail wird darauf weiter unten noch eingegangen.

Nach der vorstehend beschriebenen Neuberechung bzw. Reduktion des Farbatlas liegt von den zu ermittelnden vier Rasterprozentwerten $C_Z$, $C_Z$, $Y_Z$ und $K_Z$ ein Rasterprozentwert in Form des vorgewählten Rasterprozentwerts der ausgewählten Druckfarbe vor. Im vorliegenden Beispiel ist dies der Rasterprozentwert $K_Z$ der Druckfarbe Schwarz,

also $K_Z = K_v$. Das Ziel der nachstehenden Rechnung ist nun die Bestimmung der übrigen drei zu ermittelnden Rasterprozentwerte aus den Daten des reduzierten Farbatlas. Dies erfolgt analog zu dem für die Reduktion des Farbatlas angewandten Rechenverfahren ebenfalls mittels einer abstandsgewichteten Ausgleichsrechnung, bei der die Zusammenhänge zwischen den drei gespeicherten Farbkoordinaten in den (neuen) Stützstellen mit den zugeordneten gespeicherten Rasterprozentwerten jeweils in der Umgebung des nachzustellenden Soll-Farborts mit den Soll-Farbkoordinaten $L_s$, $a_s$ und $b_s$ durch Näherungsfunktionen approximiert werden, wobei diejenigen Stützstellen i, deren Farbabstand $\Delta E_i$ vom Soll-Farbort $L_s$, $a_s$, $b_s$ grösser ist, mit einem geringeren Gewicht $G_i$ berücksichtigt werden als Stützstellen mit einem kleineren Farbabstand. Unter Farbabstand $AE_i$ wird dabei der Ausdruck $\Delta E_i = ((L_i - L_s)^2 + (a_i - a_s)^2 + (b_i - b_s)^2)^{1/2}$ verstanden, worin $L_s$, $a_s$ und $b_s$ die Soll-Farbkoordinaten des vorgegebenen Soll-Farborts und $L_i$, $a_i$ und $b_i$ die gespeicherten Farbkoordinaten der Stützstelle i im (reduzierten) Farbatlas sind. Das farb-abstandsabhängige Gewicht bzw. der Gewichtsfaktor $G_i$ wird vorzugsweise gemäss der Beziehung $G_i = 1/(\Delta E_i)^g$ gewählt, worin g ein empirisch ermittelter Exponent im Bereich von 0,5 bis 7, vorzugsweise von 1 bis 3 ist. Eine Erhöhung von g bewirkt eine stärkere Gewichtung der Stützstellen in der Umgebung des Soll-Farborts. Dies hat zur Folge, dass die Näherungsfunktionen $f_L$, $f_a$, $f_b$ die Beziehung $L, a, b \leftrightarrow C, M, Y$ in einem zunehmend begrenzteren Bereich repräsentieren. Für die Praxis müssen auch weiter entfernte Stützstellen einen Beitrag leisten. Das empirisch, z.B. anhand von Vergleichsmessungen gewonnene Optimum für den Exponenten g liegt bei g=2.

In der folgenden mehrdimensionalen Ausgleichsrechnung werden die Zusammenhänge zwischen den Farbkoordinaten $L_i$, $a_i$ und $b_i$ und den Rasterprozentwerten $C_i$, $M_i$ und $Y_i$ durch Näherungsfunktionen $f_L (C_i, M_i, Y_i)$, $f_a(C_i, M_i, Y_i)$ und $f_b (C_i, M_i, Y_i)$ wie folgt approximiert:

$$G_i \cdot L_i = G_i \cdot f_L (C_i M_i Y_i) \qquad i = 1 \dots 64$$

$$G_i \cdot a_i = G_i \cdot f_a (C_i M_i Y_i) \qquad i = 1 \dots 64$$

$$G_i \cdot b_i = G_i \cdot f_b (C_i M_i Y_i) \qquad i = 1 \dots 64$$

Der Index i geht von 1 bis zur Anzahl Stützstellen des reduzierten Farbatlas, hier also 64. $C_i$, $M_i$ und $Y_i$ sind die gespeicherten Rasterprozentwerte der Druckfarben Cyan, Magenta und Gelb (Yellow) in der jeweiligen Stützstelle i; $L_i$, $a_i$ und $b_i$ sind die zugeordnet gespeicherten Farbkoordinaten in der Stützstelle i; und $G_i$ sind die oben erläuterten Gewichtsfaktoren.

Die drei Näherungsfunktionen $f_L$, $f_a$ und $f_b$ haben alle die gleiche Struktur und sind beispielsweise wie folgt angesetzt (die Indices i, L, a und b sind weggelassen):

$$f(C, M, Y) = k_0 + k_1 \cdot C + k_2 \cdot M + k_3 \cdot Y + k_4 \cdot C \cdot M + k_5 \cdot C \cdot Y + k_6 \cdot M \cdot Y + k_7 \cdot C^2 + k_8 \cdot M^2 + k_9 \cdot Y^2$$

Mit den abgekürzten Vektor- und Matrixschreibweisen

$$\vec{k_L} = (k_{0,L} \cdots k_{9,L}) \qquad \vec{k_a} = (k_{0,a} \cdots k_{9,a}) \qquad \vec{k_b} = (k_{0,b} \cdots k_{9,b})$$

$$\vec{L} = (L_1 \cdots L_{64}) \qquad \vec{a} = (a_1 \cdots a_{64}) \qquad \vec{b} = (b_1 \cdots b_{64})$$

$$\underline{G} = \begin{pmatrix} G_1 & & \varnothing \\ & \ddots & \\ \varnothing & & G_{64} \end{pmatrix}$$

$$A = \begin{pmatrix} 1 & C_1 & M_1 & Y_1 & C_1{\cdot}M_1 & C_1{\cdot}Y_1 & M_1{\cdot}Y_1 & C_1{}^2 & M_1{}^2 & Y_1{}^2 \\ \vdots & & & & & & & & & \vdots \\ 1 & C_i & M_i & Y_i & C_i{\cdot}M_i & C_i{\cdot}Y_i & M_i{\cdot}Y_i & C_i{}^2 & M_i{}^2 & Y_i{}^2 \\ \vdots & & & & & & & & & \vdots \\ 1 & C_{64} & M_{64} & Y_{64} & C_{64}{\cdot}M_{64} & C_{64}{\cdot}Y_{64} & M_{64}{\cdot}Y_{64} & C_{64}{}^2 & M_{64}{}^2 & Y_{64}{}^2 \end{pmatrix}$$

stellt sich das aus 3·64 Gleichungen bestehende Gleichungssystem für die 3·10 unbekannten Regressionskoeffizienten $k_{0,L}...K_{9,L}$, $k_{0,a}...k_{9,a}$, $k_{0,b}...k_{9,b}$ wie folgt dar:

$$G \cdot \vec{L} = G \cdot A \cdot \vec{k_L}$$

$$G \cdot \vec{a} = G \cdot A \cdot \vec{k_a}$$

$$G \cdot \vec{b} = G \cdot A \cdot \vec{k_b}$$

Mit den Bezeichnungen $G \cdot \vec{L} = \vec{L_g}$, $G \cdot \vec{a} = \vec{a_g}$, $G \cdot \vec{b} = \vec{b_g}$ und $G{\cdot}A = A_g$ lautet es wie folgt:

$$\vec{L_g} = A_g \cdot \vec{k_L}$$

$$\vec{a_g} = A_g \cdot \vec{k_a}$$

$$\vec{b_g} = A_g \cdot \vec{k_b}$$

Die gesuchten Regressionskoeffizienten $\vec{k_L}$, $\vec{k_a}$ und $\vec{k_b}$ werden nach der bekannten Methode der kleinsten Fehlerquadrate gemäss den folgenden Beziehungen bestimmt:

$$\vec{k_L} = (A_g{}^T{\cdot}A_g)^{-1} \cdot A_g{}^T \cdot \vec{L_g}$$

$$\vec{k_a} = (A_g{}^T{\cdot}A_g)^{-1} \cdot A_g{}^T \cdot \vec{a_g}$$

$$\vec{k_b} = (A_g{}^T{\cdot}A_g)^{-1} \cdot A_g{}^T \cdot \vec{b_g}$$

Darin bedeuten $A_g{}^T$ die zu $A_g$ transponierte Matrix und $(A_g{}^T{\cdot}A_g)^{-1}$ die zu $(A_g{}^T{\cdot}A_g)$ inverse Matrix.

Mit den auf diese Weise berechneten Regressionskoeffizienten sind die Näherungsfunktionen $f_L$, $f_a$ und $f_b$ festgelegt. Es müssen nun noch die durch sie gegebenen drei Gleichungen

$$L_s = = f_L \, (C_z M_z Y_z)$$

$$a_s = f_a \, (C_z M_z Y_z)$$

$$b_s = f_b \, (C_z M_z Y_z)$$

nach den drei Unbekannten $C_z$, $M_z$ und $Y_z$, welche die gesuchten drei Rasterprozentwerte für die nach der Auswahl einer Druckfarbe verbliebenen restlichen drei Druckfarben darstellen, aufgelöstwerden. $L_s$, $a_s$ und $b_s$ sind die Soll-Farbkoordinaten der nachzustellenden vorgegebenen Soll-Farbe.

Die drei Gleichungen sind nicht-linear, ihre Lösung erfolgt daher nach irgendeinem bekannten Verfahren, beispielsweise etwa der allgemein üblichen, in der einschlägigen Literatur beschriebenen Methode von Newton-Kantorowitsch (vgl. z.B. Bronstein-Semendjajew: Taschenbuch der Mathematik). Eine nähere Erläuterung dieser Methode erübrigt sich.

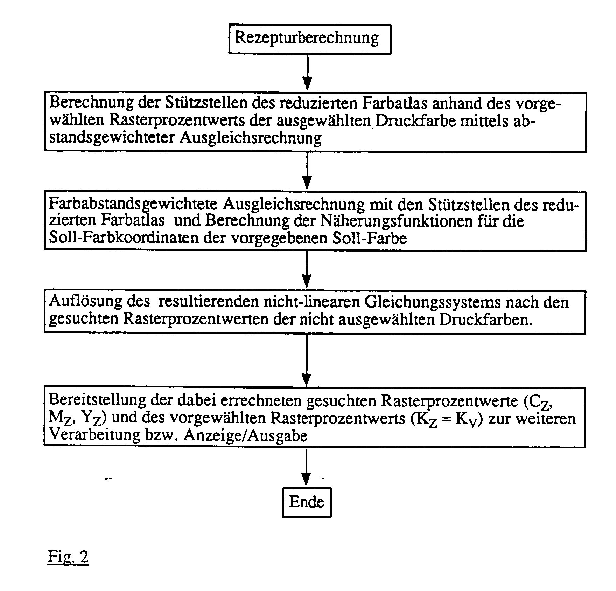

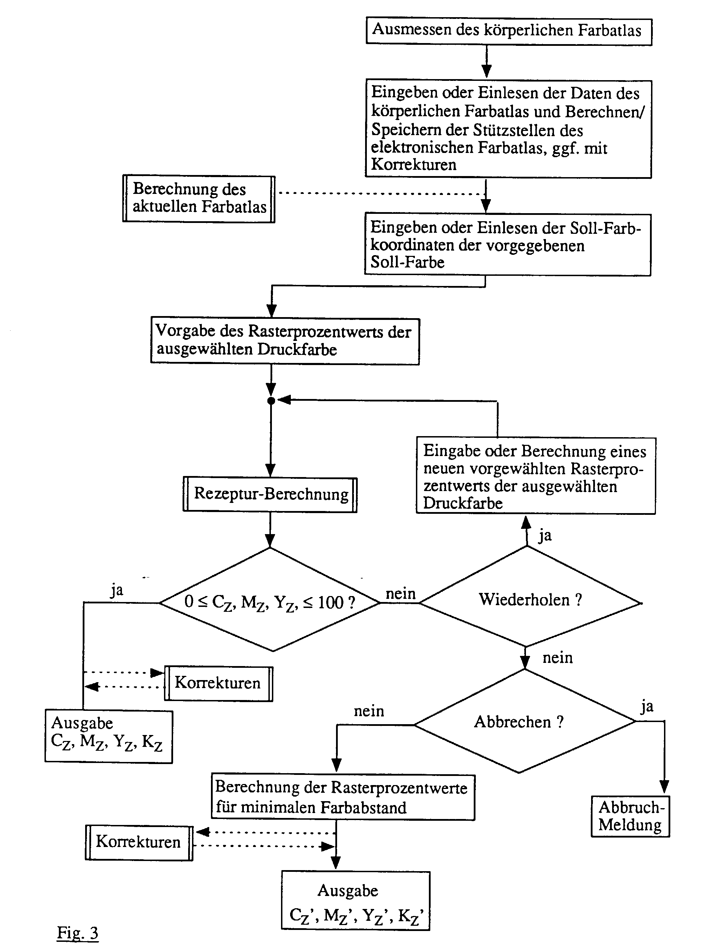

Mit der Lösung der drei Gleichungen sind die gesuchten Rasterprozentwerte $C_z$, $M_z$, $Y_z$ und $K_z$ gefunden; der Rasterprozentwert der ausgewählten Druckfarbe (hier Schwarz) entspricht dabei natürlich dem vorgewählten Wert (hier $K_z = K_v$). Die im folgenden gesamthaft als "Rezepturberechnung" bezeichneten, von einem vorgewählten Rasterprozentwert einer ausgewählten Druckfarbe ausgehenden und mit der Berechnung der Rasterprozentwerte der übrigen drei Druckfarben endenden Verfahrens- bzw. Berechnungsschritte sind damit abgeschlossen. In Fig. 2 sind die einzelnen Schritte der Rezepturberechnung nochmals übersichtlich in Form eines Fluss-Diagramms dargestellt. Fig. 3 zeigt ein Fluss-Diagramm des Gesamtverfahrens, d.h. aller bisher erläuterten und im folgenden noch beschriebenen Verfahrensschritte.

Nach Abschluss der Rezepturberechnung werden die dabei ermittelten Rasterprozentwerte daraufhin untersucht, ob sie im erlaubten Wertebereich von 0 % bis 100 % liegen. Trifft dies für alle Rasterprozentwerte zu, werden sie vom Rechner 100 in geeigneter Weise als Resultat ausgegeben, z.B. überden Bildschirm 102 oder einen angeschlossenen Drucker oder dgl.. Ferner können sie auch für spätere Verwendung/Verarbeitung abgespeichert werden. Eine weitere Möglichkeit besteht darin, die ermittelten Rasterprozentwerte zusammen mit den zugrundeliegenden Soll-Farbkoordinaten als weitere Stützstelle dem (elektronischen) Farbatlas hinzuzufügen.

Liegt wenigstens einer der ermittelten Rasterprozentwerte ausserhalb des erlaubten Wertebereichs, so wird für den Rasterprozentwert der ausgewählten Druckfarbe ein neuer Wert vorgewählt und die gesamte Rezepturberechnung für diesen neuen Wert wiederholt. Führt auch dies nicht zu innerhalb des erlaubten Wertebereichs 0 % bis 100 % liegenden Ergebnissen, wird wiederum ein neuer Wert vorgewählt u.s.w. Führt keiner der vorgewählten Rasterprozentwerte der ausgewählten Druckfarbe zu einem erlaubten, d.h. drucktechnisch möglichen Ergebnis für die übrigen 3 Rasterprozentwerte, so bedeutet dies, dass die nachzustellende Soll-Farbe ausserhalb des unter den gegebenen Druckbedingungen druckbaren Farbraums liegt. Das Verfahren wird dann entweder unter Ausgabe einer entsprechenden Meldung abgebrochen oder gemäss der im folgenden beschriebenen besonderen Ausgestaltung der Erfindung fortgesetzt.

Gemäss dieser besonderen Ausgestaltung werden diejenigen drei Rasterprozentwerte $C'_z$, $M'_z$, $Y'_z$ berechnet (der vierte Rasterprozentwert der ausgewählten Druckfarbe ist ja vorgewählt: $K'_z = K_z = K_v$), welche unter den gegebenen Druckbedingungen zu einem (druckbaren) Farbort führen, der vom vorgegebenen, ausserhalb des druckbaren Farbraumes liegenden Soll-Farbort $L_s$, $a_s$, $b_s$ den geringstmöglichen Farbabstand hat. Dabei werden die in der Rezepturberechnung zuletzt bestimmten Näherungsfunktionen $f_L$, $f_a$ und $f_b$ herangezogen und der Farbabstand

$$\Delta E = \sqrt{h^2 \cdot (L_s - f_L(C,M,Y))^2 + (a_s - f_a(C,M,Y))^2 + (b_s - f_b(C,M,Y))^2}$$

unter der Nebenbedingung $0 \leq C, M, Y \leq 100$ minimiert. Die Lösung erfolgt nach den bekannten Methoden der Minimum-Maximum-Rechnung. Als Ergebnis werden dabei die gesuchten Rasterprozentwerte $C'_z$, $M'_z$, $Y'_z$ gefunden. Durch den Gewichtsfaktor h (0 bis 1) kann dabei die Bedeutung der Helligkeitskoordinate L im Farbabstand gezielt herabgesetzt werden (Extremfall h =0).

Wie schon weiter vorne erwähnt, kann der Rasterprozentwert der ausgewählten Druckfarbe gemäss einer weiteren Ausgestaltung des erfindungsgemässen Verfahrens anstelle in Form eines fest vorgewählten Werts auch in Form eines variablen Parameters in die Rezepturberechnung einbezogen werden. Die Variation des Parameters stellt einen zusätzlichen Freiheitsgrad dar, der dazu benützt werden kann, die Rezepturberechnung bezüglich eines beliebigen zusätzlichen Kriteriums anzupassen bzw. zu optimieren, indem die Rezepturberechnung mit unterschiedlichen Parameterwerten solange wiederholt wird, bis das zusätzliche Kriterium erfüllt oder eventuell möglichst gut angenähert ist.

Ein erstes Beispiel für ein solches zusätzliches Kriterium oder eine solche zusätzliche Nebenbedingung ist die Forderung, dass der Rasterprozentwert in einer ausgewählten Druckfarbe den zur Erzielung des vorgegebenen Soll-Farborts maximal oder minimal möglichen Wert aufweisen soll.

Dazu wird ausgehend von einem beliebigen Startwert für den Rasterprozentwert der ausgewählten Farbe die Rezepturberechnung mit ständig neuen Werten in Richtung Maximum bzw. Minimum solange wiederholt, bis keine weitere Vergrösserung bzw. Verkleinerung des Rasterprozentwerts der ausgewählten Druckfarbe möglich ist, ohne dass einer der dabei ermittelten Rasterprozentwerte der übrigen Druckfarben aus dem erlaubten Wertebereich von 0 % bis 100 % herausfällt. Die zuletzt berechneten Rasterprozentwerte und der letzte Variationswert des Rasterprozentwerts der ausgewählten Druckfarbe werden dann als Ergebnis angezeigt.

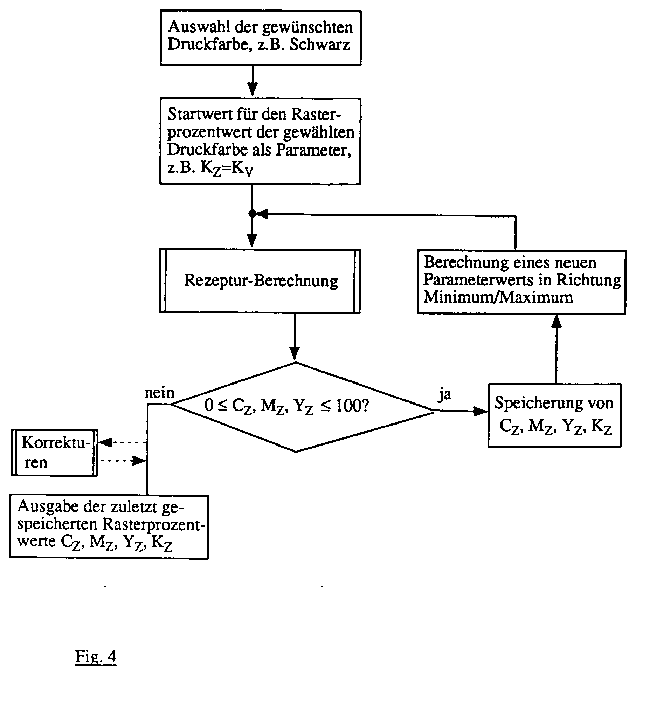

Die Variation des Parameters muss nicht unbedingt in aufsteigender bzw. absteigender Folge vorgenommen werden, sondern der jeweils neue Parameterwert kann vorzugsweise mittels geeigneter bekannter Suchalgorithmen berechnet werden. Dadurch ist der gesuchte Extremwert in der Regel schneller auffindbar. In Fig. 4 ist diese Verfahrensvariante in Formeines Flussdiagramms nochmals übersichtlich dargestellt.

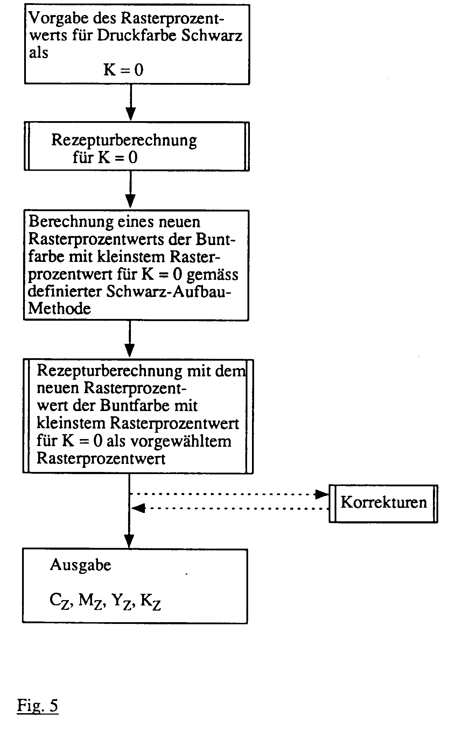

Ein weiteres Beispiel für eine zusätzliche Nebenbedingung ist die Forderung, dass der Rasterprozentwert der Druckfarbe Schwarz den Massgaben einer definierten Schwarzaufbau-Methode genügen soll. Eine solche Schwarz-Aufbau-Methode kann beispielsweise darin bestehen, dass ein bestimmter Anteil, z.B. 50 %, der Bunt-Druckfarben durch die Druckfarbe Schwarz ersetzt wird, wobei sich dieser Anteil auf die Druckfarbe mit dem geringsten Rasterprozentwert (bei Fehlen der Druckfarbe Schwarz) bezieht. Wären die ohne die Druckfarbe Schwarz erforderlichen Rasterprozentwerte also z.B. C = 60 %, M = 40 % und Y = 20 %, so wären 0,5·20 %=10 % der Druckfarbe Y durch die Druckfarbe Schwarz zu ersetzen. Der resultierende Rasterprozentwert der Druckfarbe Y ist also 10 %. Dieser Wert wird nun als vorgewählter Wert der ausgewählten Druckfarbe Y verwendet und damit wie beschrieben die Rezeptur der übrigen drei Druckfarben C, M und K berechnet. Die Fig. 5 zeigt dies nochmals in Form eines Flussdiagramms.

Ein weiteres Beispiel für eine zusätzliche Nebenbedingung ist die Forderung, dass die Metamerie der mit den gefundenen Rasterprozentwerten der einzelnen Druckfarben gedruckten Farbe im Vergleich zur Soll-Farbe minimal sein soll. Unter Metamerie bzw. dem Metamerie-Index zweier farbiger Messobjekte wird der unter vorgegebenen ersten Beleuchtungsbedingungen (einererersten Lichtart) auftretende Unterschied des Farbeindrucks der zwei farbigen Messobjekte verstanden, die bei vorgegebenen zweiten Beleuchtungsbedingungen (einer zweiten Lichtart) als farblich gleich (oder zumindest fast gleich) erscheinen. (Falls die beiden farbigen Messobjekte bei der zweiten Lichtart nicht ganz gleich sind, wird üblicherweise eine multiplikative Korrektur der Normfarbwerte X, Y, Z bei der zweiten Lichtart errechnet und in die Berechnung der Farbdifferenz bei der ersten Lichtart miteinbezogen.)

Verschiedene (genormte) Lichtarten gehen in der Farbmetrik in die Berechnungsformeln für die Farbkoordinaten aus dem Remissionsspektrum des Messobjekts ein. Beispiele für genormte Lichtarten sind D 50 für Tageslicht und A für Glühlampenlicht. Die Lichtarten sind durch ihr Spektrum charakterisiert und in tabellarischer Form in den Farbmessgeräten (Spektralfotometern) abgespeichert.

Weiter vorne wurde schon erwähnt, dass im Rechner 100 die Remissionsspektren der einzelnen Farbfelder 301 des körperlichen Farbatlas 300 gespeichert sind. Um nun den angesprochenen Metamerie-Effekt bei der Berechnung der Rasterprozentwerte minimalisieren zu können, wird gemäss einem weiteren wichtigen Aspekt der Erfindung aus den Remissionsspektren der Farbfelder des körperlichen Farbatlas 300 nicht nur ein einziger, auf einer bestimmten Lichtart basierender elektronischer Farbatlas, sondern für jede bei den Metamerie-Betrachtungen interessierende Lichtart ein separater elektronischer Farbatlas berechnet. Dabei wird davon ausgegangen, dass die charakteristischen Lichtartdaten im Rechner gespeichert sind. Alternativ können die Farbkoordinaten für die verschiedenen Lichtarten auch wieder in, Spektralfotometer berechnet und in den Rechner übertragen werden, sofern dieses dazu ausgebildet ist.

Die für die verschiedenen Lichtarten berechneten gespeicherten Farbatlanten, die im folgenden als Lichtart-Farbatlanten bezeichnet werden, unterscheiden sich nur durch die gespeicherten Farbkoordinaten-Werte, die jeweils zugehörigen nominellen Rasterprozentwerte in den einzelnen Stützstellen sind identisch.

Die Berechnung des Metamerie-Effekts erfolgt anhand der gespeicherten Lichtart-Farbatlanten und der für alle interessierenden Lichtarten $LA_i$ vorgegebenen Soll-Farborte bzw. Soll-Farbkoordinaten $(L_s, a_s, b_s)_{LAi}$ wie folgt:

Anhand einer der gespeicherten Lichtart-Farbatlanten, z.B. desjenigen für die Lichtart $LA_j$, wird für die nachzustellende Sollfarbe $(L_s, a_s, b_s)_{LAj}$ für eine ausgewählte Druckfarbe, z.B. Schwarz, der maximale und der minimale Rasterprozentwert wie vorstehend beschrieben bestimmt. Innerhalb des durch diese beiden Extremwerte definierten Intervalls wird dann mit dem Rasterprozentwert der ausgewählten Drucktarbe als variablem Parameter $K_v$ eine Rezepturberechnung für die Lichtart $LA_j$ durchgeführt. Die dabei ermittelten Rasterprozentwerte sind im folgenden als $C_j$, $M_j$, $Y_j$ und $K_j=K_v$ bezeichnet.

Aus den so ermittelten Rasterprozentwerten werden dann durch Einsetzen in die Lichtart-Farbatlanten der übrigen Lichtarten $LA_{i \neq j}$ die zu erwartenden Ist-Farborte $(L, a, b)_{LAi \neq j}$ bei den übrigen Lichtarten $LA_{i \neq j}$ errechnet. (Falls die Rasterprozentwerte nicht gerade auf eine Stützstelle fallen, sondern Zwischenwerte sind, so werden die zugehörigen Farbkoordinaten in den einzelnen Lichtart-Farbatlanten durch Interpolation mittels einer Ausgleichsrechnung analog der im Zusammenhang mit der Rezepturberechnung vorstehend beschriebenen Ausgleichsrechnung bestimmt.)

Nun werden die Einzel-Metamerie-Effekte $MET_i$ als Farbabstände zwischen den berechneten Ist-Farborten und den zugehörigen Soll-Farborten bei den einzelnen Lichtarten $LA_i$ berechnet:

$$MET_i = \Delta E_i = \sqrt{(L_{LA_i} - L_{s_{LA_i}})^2 + (a_{LA_i} - a_{s_{LA_i}})^2 + (b_{LA_i} - b_{s_{LA_i}})^2}$$

(Für i =j ist $MET_i$ definitionsgemäss null.)

Der Gesamt-Metamerie-Effekt MET wird nun als gewichtete Summe der einzelnen Metamerie-Effekte $MET_i$ an-

gesetzt:

$$MET = \Sigma_i\, m_i \cdot MET_i$$

Darin sind $m_i$ den Einzel-Metamerie-Effekten $MET_i$ zugeordnete Gewichtsfaktoren, welche im einfachsten Fall alle gleich sein können. Die Summe geht über die Anzahl der in Betracht gezogenen Lichtarten. In der Praxis wird man sich in der Regel auf die zwei angeführten Lichtarten D 50 und A beschränken, so dass der Gesamt-Metamerie-Effekt identisch mitdem Einzel-Metamerie-Effekt bei diesen beiden Lichtarten ist.

Die vorstehend angegebene Formel für den Gesamt-Metamerie-Effekt MET enthält den vorgewählten Rasterprozentwert $K_v$ der ausgewählten Druckfarbe (hier Schwarz) als innerhalb des angegebenen Intervalls frei wählbaren Parameter bzw. als noch freie Variable. Mit Hilfe eines geeigneten numerischen Suchverfahrens, z.B. mittels der sog. Intervallschachtelung, wird nun der Parameter innerhalb des genannten Intervalls so bestimmt, dass der Gesamt-Metamerie-Effekt MET minimal wird. Der so bestimmte Parameter $K_v$ und die zu diesem gehörigen Rasterprozentwerte der übrigen drei Druckfarben werden dann als Rezeptur ausgegeben.

In den vorstehenden Erläuterungen wurde davon ausgegangen, dass die Druckbedingungen, unter denen der körperliche Farbatlas 300 erstellt wurde, mit den für den Druck der nachzustellenden Soll-Farbe vorgesehenen Druckbedingungen übereinstimmen. Gemäss einem weiteren wesentlichen Aspekt der Erfindung lässt sich das Verfahren aber auch dahingehend erweitern, dass es auch dann einsetzbar ist, wenn Abweichungen in den Druckbedingungen vorliegen. Im folgenden wird die erfindungsgemässe Vorgehensweise beschrieben, wenn unterschiedliche Druckmaschinen eingesetzt werden bzw. Unterschiede in den Druckkennlinien vorliegen. Unter Druckkennlinie wird dabei der Zusammenhang zwischen den nominellen Rasterprozentwerten in den zugrundeliegenden Rasterfilmen oder Druckplatten und den sich beim Drucken ergebenden Tonwertzunahmen bzw. Rasterpunktvergrösserungen verstanden. Die Tonwertzunahme ist die Differenz der Flächenbedeckungen (Rasterprozentwerte) auf der Druckplatte (Rasterfilm) und im Druck.

Bei den nominellen Flächenbedeckungen 0 % und 100 % sind die Tonwertzunahmen naturgemäss null. Wenn die Tonwertzunahmen einer Druckfarbe bei (wenigstens) zwei mittleren nominellen Flächenbedeckungen, beispielsweise 40 % und 80 %, bekannt sind, lässt sich die zugehörige Druckkennlinie für die betreffende Druckfarbe mit hinreichender Genauigkeit durch ein Polynom dritten Grades t(A) approximieren:

$$Z(A) = a_0 + a_1 \cdot A + a_2 \cdot A^2 + a_3 \cdot A^3 \equiv t(A)$$

Darin bedeuten A die nominelle Flächenbedeckung bzw. den nominellen Rasterprozentwert des Films, Z(A) die Tonwertzunahme in Abhängigkeit von A und $a_0$ bis $a_3$ die konstanten Regressionskoeffizienten. Setzt man die vier bekannten Tonwertzunahmen bei den gegebenen nominellen Rasterprozentwerten ein, so erhält man vier Gleichungen, durch welche die vier Regressionskoeffizienten $a_0$ bis $a_3$ bestimmt sind. Mit mehr Stützstellen lässt sich die Druckkennlinie durch ein Polynom höherer Ordnung approximieren.

Für die typischen Druckbedingungen, unterdenen der im folgenden als typischer Farbatlas bezeichnete körperliche Farbatlas 300 erstellt wurde, lassen sich die Tonwertzunahmen für die einzelnen Druckfarben bei verschiedenen nominellen Rasterprozentwerten direkt aus den bekannten abgespeicherten nominellen Rasterprozentwerten der Einfarben-Farbfelder des typischen Farbatlas (4x3 Einfarbenfelder + Papierweiss) und aus den Remissionsspektren der jeweiligen Farbfelder berechnen. Geeignete Verfahren sind in der Literatur beschrieben und bedürfen deshalb hierkeiner weiteren Erläuterung. Alternativ können die Tonwertzunahmen auch mit einemderbekannten für diese Zwecke bestimmten Messgeräte bestimmt und in den Rechner eingegeben werden.

Aus den bekannten nominellen Rasterprozentwerten der Einfarben-Farbfelder und den berechneten oder gemessenen zugeordneten Tonwertzunahmen werden nun die den typischen Druckbedingungen zugrundeliegenden Druckkennlinien für die vier Druckfarben bestimmt:

$$Z_{typ}(C) = t_c(C)$$

$$Z_{typ}(M) = t_m(M)$$

$$Z_{typ}(Y) = t_y(Y)$$

$$Z_{typ}\ (K) = t_k\ (K)$$

Darin bedeuten C, M, Y und K die nominellen (Film-)Rasterprozentwerte in den Druckfarben Cyan, Magenta, Gelb und Schwarz und stehen $t_c$, $t_m$, $t_y$ und $t_k$ für die genannten Polynome dritten Grades mit den für jede Druckfarbeeigenen Regressionskoeffizienten $a_o$ bis $a_3$.

In analoger Weise werden nun die Druckkennlinien für die aktuellen Druckbedingungen, unterdenen die nachzustellende Soll-Farbe gedruckt werden soll, bestimmt. Dazu wird ein Druckkontrollstreifen mit einem unbedruckten Feld (Papierweiss) sowie für jede Druckfarbe mit einem Volltonfeld (100 %) und mindestens zwei Einzelfarben-Rasterfeldern bekannter mittlerer nomineller Flächenbedeckungen unter den aktuellen Druckbedingungen gedruckt und die entsprechende Tonwertzunahme der einzelnen Rasterfelder gemessen. In analoger Weise werden daraus die aktuellen Druckkennlinien berechnet:

$$Z_{akt}\ (C) = T_c\ (C)$$

$$Z_{akt}\ (M) = T_m\ (M)$$

$$Z_{akt}\ (Y) = T_y\ (Y)$$

$$Z_{akt}\ (K) = T_k\ (K)$$

Darin bedeuten C, M, Y und K wieder die nominellen Rasterprozentwerte in den vier Druckfarben und stehen $T_c$, $T_m$, $T_y$ und $T_k$ für die genannten Polynome dritten Grades mit den für jede Druckfarbe eigenen Regressionskoeffizienten $a_0$ bis $a_3$.

Um nun die durch die verschiedenen Druckkennlinien bedingten Unterschiede zwischen den typischen und den aktuellen Druckbedingungen zu berücksichtigen und das Verfahren dadurch eben auch bei unterschiedlichen Druckbedingungen einsetzbar zu machen, werden gemäss einem weiteren wichtigen Aspekt der Erfindung aus den gemäss den vorstehenden Ausführungen ermittelten Rasterprozent-Rezepturen anhand der Druckkennlinien wie folgt korrigierte Rezepturen errechnet:

$$C_z'+ Z_{akt}(C'_z)= C_z + Z_{typ}(C_z)$$

$$M_z'+ Z_{akt}(M'_z)= M_z + Z_{typ}(M_z)$$

$$Y_z'+ Z_{akt}(Y'_z)= Y_z + Z_{typ}(Y_z)$$

$$K_z'+ Z_{akt}(K'_z)= K_z + Z_{typ}(K_z)$$

Darin bedeuten $C_z$, $M_z$, $Y_z$ und $K_z$ die bei der Rezepturberechnung (typ. Farbatlas) ermittelten Rasterprozentwerte der vier Druckfarben, $C_z'$, $M_z'$, $Y_z'$ und $K_z'$ sind die entsprechenden korrigierten Werte, und $Z_{typ}$ und $Z_{akt}$ sind die typischen bzw. aktuellen Druckkennlinien (Tonwertzunahmen) für die vier Druckfarben. (Die vier Gleichungen sindnach $C_z'$, $M_z'$, $Y_z'$ und $K_z'$ zu lösen.)

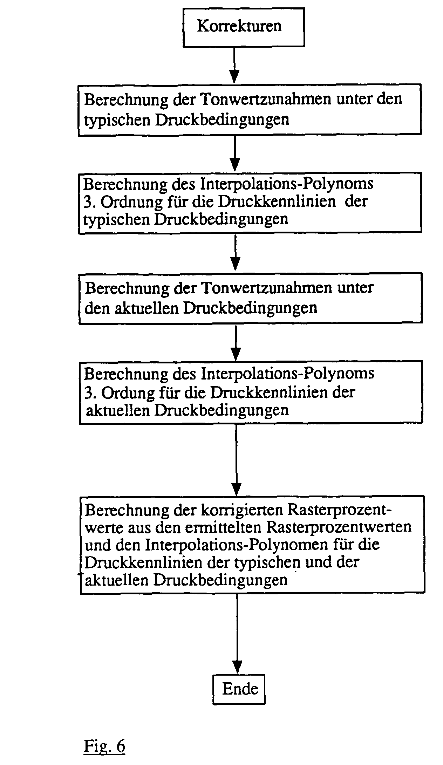

Die vorstehend erläuterten Korrekturschritte sind in den Figuren 3-5 durch den mit "Korrekturen" bezeichneten Block symbolisiert. Die einzelnen Schritte sind in Fig. 6 in Formeines Fluss-Diagramms übersichtlich zusammengefasst. Die Druckkennlinien brauchen selbstverständlich nur einmal berechnet zu werden und können, bei gleichbleibenden Druckbedingungen, immer wieder für die Korrektur der Rezeptur verwendet werden.

Ein weiterer Grund für unterschiedliche typische und aktuelle Druckbedingungen kann sich daraus ergeben, dass für den aktuellen Druckvorgang ein anderes Papier (Substrat) verwendet wird als für die Erstellung des körperlichen Farbatlas, der dem gespeicherten elektronischen Farbatlas zugrundeliegt. Dieser Papier- bzw. allgemein Substratbedingte Unterschied kann gemäss einem weiteren Aspekt der Erfindung dadurch berücksichtigt werden, dass bei der Berechnung der Farbkoordinaten der Farbfelder bzw. Stützstellen des elektronischen Farbatlas aus den Remissionsspektren der Farbfelder korrigierend eingegriffen wird. Dazu wird das Remissionsspektrum des aktuellen Papiers (Substrats) aufgenommen, das Remissionsspektrum des typischen Papiers, auf dem der typische körperliche Farbatlas gedruckt ist, liegt bereits in Form des Remissionsspektrums des Farbfelds mit Rasterprozentwert null in allen vier Druckfarben vor. Es wird nun für jede einzelne diskrete Wellenlänge der Spektren der Quotient des zugehörigen Spektralwerts des aktuellen Papiers und des zugehörigen Spektralwerts des typischen Papiers berechnet, und die Remissionsspektren der einzelnen Farbfelder werden dann in der Weise korrigiert, dass jeder einzelne Spektralwert einer gegebenen Wellenlänge mit dem für diese Wellenlänge berechneten Quotienten multipliziert wird. Formelmässig stellt sich dies wie folgt dar:

$$R'(\lambda) = R(\lambda) \cdot [R_{akt}(\lambda)/R_{typ}(\lambda)]$$

Darin bedeuten $R_{akt}(\lambda)$ und $R_{typ}(\lambda)$ die spektralen Remissionswerte des aktuellen und des typischen Papiers bei der Wellenlänge $\lambda$, $R(\lambda)$ die am körperlichen Farbatlas gemessenen spektralen Remissionswerte der einzelnen Farbfelder bei der Wellenlänge $\lambda$ und $R'(\lambda)$ die entsprechenden korrigierten spektralen Remissionswerte, aus denen dann wie beschrieben die Farbkoordinaten für den aktuellen Farbatlas (für eine oder mehrere Lichtarten) berechnet werden.

Anstelle die Remissionsspektren zu korrigieren, kann alternativ auch bei den bei der Berechnung der Farbkoordinaten gemäss CIE als Zwischenwerte anfallenden Normfarbwerten korrigiert und eingegriffen werden. Dazu werden die Normfarbwerte für das aktuelle Papier und das typische Papier berechnet und die Quotienten der jeweils entsprechenden Normfarbwerte gebildet. Die bei der Berechnung der Farbkoordinaten der einzelnen Farbfelder anfallenden Normfarbwerte werden dann mit den entsprechenden Quotienten multipliziert:

$$X_i' = X_i \cdot [X_{akt_i} / X_{typ_i}] \qquad i = 1, 2, 3$$

Darin bedeuten und die Normfarbwerte des aktuellen und des typischen Papiers, $X_i$ sind die aus den Remissionsspektren berechneten Normfarbwerte der einzelnen Farbfelder und $X_i'$ sind die entsprechenden korrigierten Normfarbwerte.

Eine weitere Möglichkeit, das erfindungsgemässe Verfahren für von den typischen Druckbedingungen, unter welchen der körperliche Farbatlas erstellt wurde, abweichende aktuelle Druckbedingungen einzusetzen, besteht gemäss einem weiteren Hauptaspekt der Erfindung darin, den gespeicherten typischen Farbatlas mittels einiger weniger, unter den aktuellen Druckbedingungen ermittelter Stützstellen zu aktualisieren. Zu diesem Zweck wird unter den aktuellen Druckbedingungen ein spezieller, im folgenden als körperlicher Vergleichsfarbatlas bezeichneter Druckkontrollstreifen 500 mit einer relativ geringen Anzahl von z.B. 32 Farbfeldern 501 gedruckt und seine Daten werden analog dem typischen Farbatlas in den Rechner eingegeben und abgespeichert (Fig. 1). Die Farbfelder des Vergleichsfarbatlas enthalten typischerweise die für die aktuellen Druckbedingungen charakteristischen nominellen Rasterprozentwerte in den einzelnen Druckfarben, darunter je ein Volltonfeld (Flächenbedeckung 100 %) für die drei Buntfarben sowie ein unbedrucktes Feld (Papierweiss). Beispielsweise sind für die Druckfarbe Schwarz nur zwei Flächenbedeckungsabstufungen vorgesehen. Der Vergleichsfarbatlas ist somit relativ handlich, leicht herstellbar und ohne grossen Aufwand in den Rechner 100 zu übertragen.

Nach dem Einlesen der Daten des körperlichen Vergleichsfarbatlas in den Rechner enthält dieser dessen elektronisches Aequivalent in tabellarischer Form. Dieses wird im folgenden ebenfalls als Vergleichsfarbatlas bezeichnet. Er enthält für jedes der im angenommenen Beispiel 32 Farbfelder bzw. Stützstellen die vier nominellen Rasterprozentwerte und die drei zugeordneten Farbkoordinaten analog dem umfangreicheren typischen Farbatlas mit seinen (hier) 256 Stützstellen.

Als nächster Schritt wird aus dem gespeicherten typischen Farbatlas und dem neu hinzugekommenen Vergleichsfarbatlas ein Differenzfarbatlas mit der gleichen Anzahl von Stützstellen wie der Vergleichsfarbatlas gebildet. Konkret heisst dies, dass für jede Stützstelle des Vergleichsfarbatlas die Differenzen der zugeordneten Farbkoordinaten mit den jeweiligen Farbkoordinaten des typischen Farbatlas gebildet werden. Falls die Stützstellen des Vergleichsfarbatlas nicht mit denen des typischen Farbatlas übereinstimmen, werden im typischen Farbatlas die Farbkoordinaten, welche zu den durch die Stützstellen des Vergleichsfarbatlas gegebenen Rasterprozentwerten gehören, mittels des weiter vorne im Zusammenhang mit der Rezepturberechnung im Detail erläuterten Ausgleichsrechnungsverfahrens interpoliert. Ebenfalls wieder mittels eines analogen Ausgleichsrechnungsverfahrens wird nun der Differenzfarbatlas erweitert, indem für alle Stützstellen des typischen Farbatlas und die damit definierten Rasterprozentwerte der einzelnen Druckfarben die zugehörigen Farbkoordinatendifferenzen aus den zuvor in den 16 ursprünglichen Stützstellen des Differenzfarbatlas berechneten 16x3 Farbkoordinatendifferenzen interpoliert werden. Dabei genügt es in der Regel, die Interpolation linear durchzuführen, wodurch sich der Rechenaufwand reduziert.

Schliesslich wird der so gebildete, u.a. dieselben Stützstellen wie der typische Farbatlas aufweisende Differenzfarbatlas mit dem typischen Farbatlas durch stützstellenweise Addition zu einem aktuellen Farbatlas kombiniert. Konkret heisst dies, dass in jeder Stützstelle i des typischen Farbatlas zu den drei gespeicherten Farbkoordinaten $L_i$, $a_i$, $b_i$ die entsprechenden drei Farbkoordinatendifferenzen $\Delta L_i$, $\Delta a_i$, $\Delta b_i$ des Differenzfarbatlas in denselben Stützstellen hinzuaddiert werden. Der so gebildete aktuelle Farbatlas hat dann noch das charakteristische Verhalten des typischen Farbatlas, ist aber an die aktuellen Druckbedingungen angepasst und stimmt an den Stützstellen des Vergleichsfarbatlas mit diesem exakt überein.

Durch die erfindungsgemässe Anpassung des typischen Farbatlas an die aktuellen Druckbedingungen mittels eines vergleichsweise einfachen und nur sehr beschränkten Vergleichsfarbatlas entfällt die Notwendigkeit bekannter Systeme, bei jeder Aenderung der Druckbedingungen einen vollständigen neuen Farbatlas erstellen zu müssen.

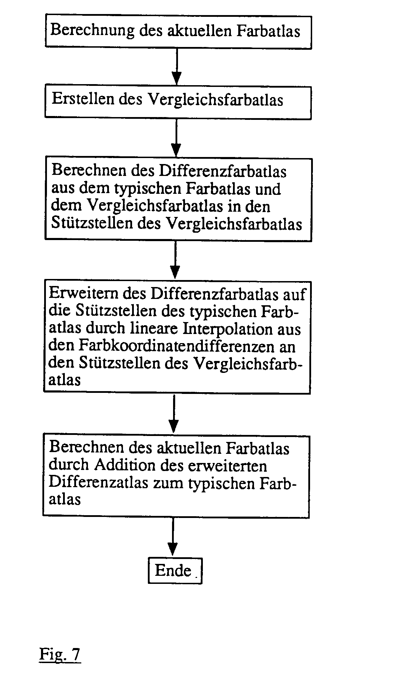

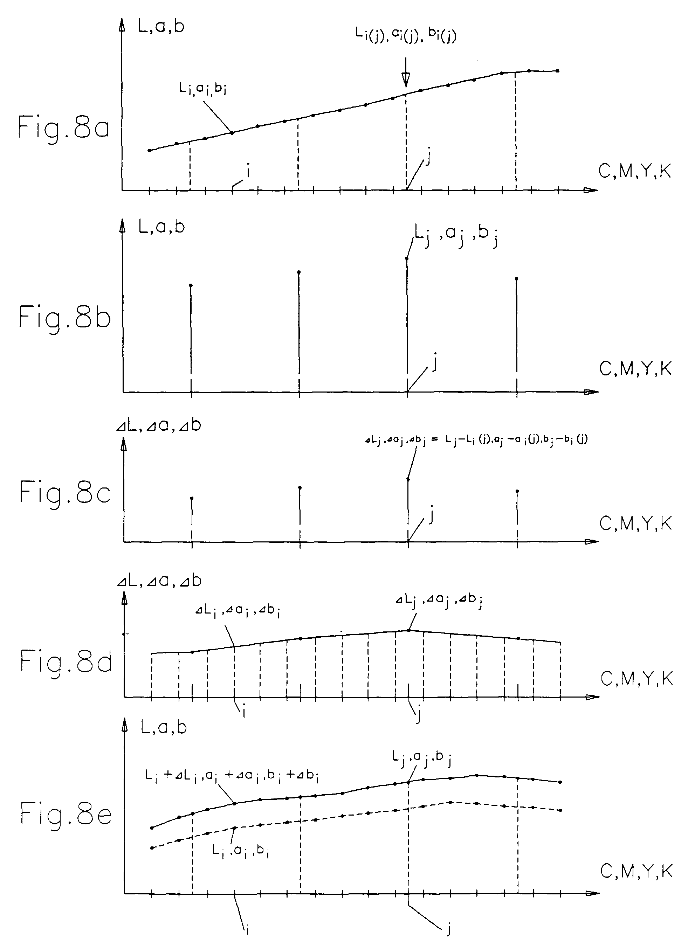

Die einzelnen Schritte der Erstellung des aktuellen Farbatlas sind in Fig. 7 in Form eines Fluss-Diagramms zusammengefasst. Die grafischen Darstellungen der Figuren 8a-8e dienen zur weiteren Erläuterung.

In den Figuren 8a-8e sind jeweils Ausschnitte aus einem typischen Farbatlas (Fig. 8a), einem Vergleichsfarbatlas (Fig. 8b), einem daraus gebildeten Differenzfarbatlas (Fig. 8c), einem durch Interpolation erweiterten Differenzfarbatlas (Fig. 8d) und einem aktuellen Farbatlas (Fig. 8e) dargestellt. Die Darstellung ist aus Anschaulichkeitsgründen auf zwei Dimensionenreduziert. In Wirklichkeit handelt es sich jedoch um einen fünfdimensionalen Raum mit den unabhängigen Koordinaten, C, M, Y und K unddendrei abhängigen Koordinaten L, a und b bzw. $\Delta L$, $\Delta a$, $\Delta b$.

Die Stützstellen des typischen Farbatlas sind mit i bezeichnet, die zugehörigen Farbkoordinaten mit $L_i$, $a_i$, $b_i$. Die Stützstellen des Vergleichsfarbatlas sind mit j bezeichnet, die zugehörigen Farbkoordinaten mit $L_j$, $a_j$, $b_j$. Der Differenzfarbatlas weist nur die Stützstellen j mit den zugehörigen Farbkoordinatendifferenzen $\Delta L_j$, $\Delta a_j$, $\Delta b_j$ auf. Der erweiterte Differenzfarbatlas enthält zusätzlich die Stützstellen i mit den Farbkoordinatendifferenzen $AL_i$, $Aa_i$, $Ab_i$. Die interpolierten Zwischenwerte der Farbkoordinaten des typischen Farbatlas in den Stützstellen j sind mit $L_i(j)$, $a_i(j)$ und $b_i(j)$ bezeichnet.

Alle weiteren vorstehend beschriebenen Verfahrensschritte zur Bestimmung der gesuchten Rasterprozentwerte der einzelnen Druckfarben erfolgen nun auf der Basis des aktuellen Farbatlas anstelle des typischen Farbatlas. Es versteht sich, dass die vorstehend beschriebenen Korrekturmassnahmen bei sich ändernden Druckbedingungen auch im Zusammenhang mit dem aktuellen Farbatlas angewandt werden können.

**Patentansprüche**

1.  Verfahren zur Ermittlung der für die Erzielung eines vorgegebenen Soll-Farborts erforderlichen Rasterprozentwerte der einzelnen Druckfarben im autotypischen Mehrfarbendruck, insbesondere im Vierfarben-Offsetdruck mit den Druckfarben Cyan, Magenta, Gelb und Schwarz, anhand eines Farbatlas mit einer Anzahl von Farbfeldern bekannter abgestufter Rasterprozentwerte der einzelnen Druckfarben, wobei die durch Farbkoordinaten definierten Farborte der Farbfelder bestimmt und zusammen mit den bekannten Rasterprozentwerten der Farbfelder in gegenseitig zugeordneter Form gespeichert werden und die zu ermittelnden Rasterprozentwerte des vorgegebenen Soll-Farborts anhand der Soll-Farbkoordinaten des Soll-Farborts durch Zwischenwertbestimmung aus den gespeicherten Farbkoordinaten und den zugeordnet gespeicherten Rasterprozentwerten der Farbfelder ermittelt werden, dadurch gekennzeichnet, dass zunächst auf der Basis eines vorgewählten Rasterprozentwertes einer ausgewählten Druckfarbe ein neuer Farbatlas erstellt wird, welcher gegenüber dem ursprünglichen Farbatlas eine reduzierte Anzahl von Farbfeldern aufweist, wobei die Erstellung dieses neuen Farbatlas durch eine abstandsgewichtete Ausgleichsrechnungsmethode erfolgt, bei der der Zusammenhang zwischen den gespeicherten Rasterprozentwerten und den gespeicherten Farbkoordinaten der Farbfelder jeweils in der Umgebung des vorgewählten Rasterprozentwertes der ausgewählten Druckfarbe durch Näherungsfunktionen in der Weise angenähert wird, dass gegenüber dem vorgewählten Rasterprozentwert in der ausgewählten Druckfarbe einen grösseren Farbabstand aufweisende gespeicherte Farbkoordinaten mit einem geringeren Gewicht bei der Ausgleichsrechnung berücksichtigt werden als solche mit einem kleineren Farbabstand, und dass basierend auf diesem neuen, reduzierten Farbatlas die Zwischenwertbestimmung nach einer abstandsgewichteten Ausgleichsrechnungsmethode durchgeführt wird, bei der der Zusammenhang zwischen den gespeicherten Rasterprozentwerten und den gespeicherten Farbkoordinaten der Farbfelder in der Umgebung des Soll-Farborts durch Näherungsfunktionen in der Weise angenähert wird, dass gegenüber dem Soll-Farbort einen grösseren Farbabstand aufweisende gespeicherte Farbkoordinaten mit einem geringeren Gewicht bei der Ausgleichsrechnung berücksichtigt werden als solche mit einem kleineren Farbabstand, und wobei zur Bestimmung der Näherungsfunktionen alle Farbfelder des reduzierten Farbatlas verwendet werden.

2.  Verfahren nach Anspruch 1, dadurch gekennzeichnet, dass das Gewicht, mit dem die gespeicherten Farbkoordinaten der einzelnen Farbfelder in die Ausgleichsrechnung eingehen, gemäss der Formel $G_i = 1 / (\Delta E_i)^g$ gewählt wird, worin $G_i$ das jeweilige Gewicht und $\Delta E_i$ der Farbabstand des jeweiligen Farbfelds vom Soll-Farbort ist und worin g einen empirischen Exponenten im Bereich von 0,5 bis 7, vorzugsweise von 1 bis 3 bedeutet.

3.  Verfahren nach Anspruch 1 oder 2, dadurch gekennzeichnet, dass im Vierfarbendruck der zu ermittelnde Rasterprozentwert einer ausgewählten Druckfarbe, insbesondere Schwarz, vorgewählt wird und dass die zu ermittelnden Rasterprozentwerte der übrigen drei Druckfarben unter Berücksichtigung des vorgewählten Rasterprozentwerts der ausgewählten Druckfarbe bestimmt werden.

4.  Verfahren nach Anspruch 3, dadurch gekennzeichnet, dass aus den gespeicherten Farbkoordinaten und Rasterprozentwerten der Farbfelder und aus dem vorgewählten Rasterprozentwert der ausgewählten Druckfarbe nach einer vorzugsweise abstandsgewichteten Ausgleichsrechnungsmethode neue Farbkoordinaten und zugeordnete neue Rasterprozentwerte so berechnet werden, dass sämtliche zugeordneten neuen Rasterprozentwerte der ausgewählten Druckfarbe gleich dem vorgewählten Rasterprozentwert sind, und dass die zu ermittelnden Rasterprozentwerte der übrigen drei Druckfarben aus den neuen Farbkoordinaten und neuen Rasterprozentwerten berechnet werden.

5.  Verfahren nach Anspruch 4, dadurch gekennzeichnet, dass der zu ermittelnde Rasterprozentwert der ausgewählten Druckfarbe als variabler Parameter vorgewählt und zur Erfüllung einer zusätzlichen Nebenbedingung variiert wird, wobei die zu ermittelnden Rasterprozentwerte der übrigen drei Druckfarben solange jeweils für einen neuen Variationswert des vorgewählten Rasterprozentwerts der ausgewählten Druckfarbe berechnet werden, bis die zusätzliche Nebenbedingung erfüllt ist.

6.  Verfahren nach Anspruch 5, dadurch gekennzeichnet, dass als zusätzliche Nebenbedingung gefordert wird, dass der zu ermittelnde Rasterprozentwert der ausgewählten Druckfarbe maximal oder minimal ist.

7.  Verfahren nach Anspruch 4, dadurch gekennzeichnet, dass der zu ermittelnde Rasterprozentwert der ausgewählten Druckfarbe als maximal oder minimal vorgewählt wird, wobei die Bestimmung der zu ermittelnden Rasterprozentwerte der übrigen drei Druckfarben ausgehend von einem Startwert für den zu ermittelnden Rasterprozentwert der ausgewählten Druckfarbe für verschiedene Werte des zu ermittelnden Rasterprozentwerts der ausgewählten Druckfarbe solange wiederholt wird, bis der zu ermittelnde Rasterprozentwert der ausgewählten Druckfarbe einen Endwert erreicht hat, bei dessen Über- beziehungsweise Unterschreitung wenigstens einer der zu ermittelnden Rasterprozentwerte der übrigen drei Druckfarben ausserhalb eines zulässigen Wertebereichs liegen würde.

8.  Verfahren nach Anspruch 5, dadurch gekennzeichnet, dass für die Farbfelder des Farbatlas separate Sätze von Farbkoordinaten für unterschiedliche Lichtarten bestimmt werden, dass die zu ermittelnden Rasterprozentwerte der einzelnen Druckfarben anhand eines der separaten Sätze von Farbkoordinaten berechnet werden, dass aus den berechneten Rasterprozentwerten die zugehörigen Farbkoordinaten für die übrigen Lichtarten berechnet werden und dass als zusätzliche Nebenbedingung gefordert wird, dass der durch die Summe der ggf. gewichteten Farbabstände der durch die so berechneten Farbkoordinaten der übrigen Lichtarten definierten Farborte zu den Soll-Farborten der jeweiligen Lichtart ausgedrückte Metamerie-Effekt minimal ist.

9.  Verfahren nach einem der vorangehenden Ansprüche, dadurch gekennzeichnet, dass die ermittelten Rasterprozentwerte der einzelnen Druckfarben entsprechend den den Zusammenhang zwischen nominellen Rasterprozentwerten und Tonwertzunahmen darstellenden Druckkennlinien der für den Druck vorgesehenen Druckmaschine korrigiert werden.

10. Verfahren nach einem der vorangehenden Ansprüche, dadurch gekennzeichnet, dass bei der Bestimmung der Farbkoordinaten der Farbfelder des Farbatlas eine allfällige Abweichung des ersten Substrats, auf dem der Farbatlas gedruckt ist, vom zweiten Substrat, auf dem der vorgegebene Farbort gedruckt werden soll, mitberücksichtigt wird.

11. Verfahren nach Anspruch 10, dadurch gekennzeichnet, dass die Farbkoordinaten der Farbfelder des Farbatlas aus den Remissionsspektren der Farbfelder bestimmt werden und dass jeder spektrale Remissionswert der Remissionsspektren mit dem Quotienten aus dem spektralen Remissionswert des zweiten Substrats und dem spektralen Remissionswert des ersten Substrats bei der jeweiligen Wellenlänge mulitipliziert wird.

12. Verfahren nach Anspruch 10, dadurch gekennzeichnet, dass die Farbkoordinaten der Farbfelder des Farbatlas aus den Remissionsspektren der Farbfelder und den daraus gemäss CIE berechneten Normfarbwerten berechnet werden und dass jeder Normfarbwert mit dem Quotienten aus dem betreffenden Normfarbwert des zweiten Substrats und dem betreffenden Normfarbwert des ersten Substrats multipliziert wird.

13. Verfahren nach Anspruch 4, dadurch gekennzeichnet, dass bei der Ausgleichsrechnung für die Berechnung der neuen Farbkoordinaten und zugeordneten neuen Rasterprozentwerte der Zusammenhang der gespeicherten Farbkoordinaten mit den gespeicherten Rasterprozentwerten der Farbfelder in der Umgebung des vorgewählten Rasterprozentwerts der ausgewählten Druckfarbe durch Näherungsfunktionen in der Weise angenähert wird, dass gegenüber dem vorgewählten Rasterprozentwert der ausgewählten Druckfarbe eine grössere Differenz aufweisende gespeicherte Rasterprozentwerte mit einem geringeren Gewicht berücksichtigt werden als solche mit einer kleineren Differenz.

14. Verfahren nach Anspruch 13, dadurch gekennzeichnet, dass das Gewicht umgekehrt proportional zur Differenz gewählt wird.

15. Verfahren nach einem der vorangehenden Ansprüche, dadurch gekennzeichnet, dass als Farbkoordinaten die L*, a*,b*-Koordinaten oder die L*,u*,v*-Koordinaten gemäss CIE verwendet werden.

16. Verfahren nach Anspruch 4 oder 5, dadurch gekennzeichnet, dass der Rasterprozentwert der ausgewählten Druckfarbe nach Massgabe einer definierten Schwarz-Aufbau-Methode vorgewählt wird.

17. Verfahren nach einem der vorangehenden Ansprüche, dadurch gekennzeichnet, dass ein Farbatlas verwendet wird, dessen Farbfelder für jede Druckfarbe in 3-10, vorzugsweise 4-6, insbesondere 4-5 verschiedene Rasterprozentwerte abgestuft sind.

18. Verfahren nach einem der vorangehenden Ansprüche, dadurch gekennzeichnet, dass unter typischen Druckbedingungen ein typischer Farbatlas mit einer ersten Anzahl von Farbfeldern erstellt, die Farbkoordinaten seiner Farbfelder bestimmt und zusammen mit den zugeordneten bekannten Rasterprozentwerten der einzelnen Druckfarben gespeichert werden, dass unter den zum Druck des vorgegebenen Soll-Farborts vorgesehenen aktuellen Druckbedingungen ein Vergleichsfarbatlas mit einer zweiten Anzahl von Farbfeldern bekannter abgestufter Rasterprozentwerte der einzelnen Druckfarben erstellt und die Farbkoordinaten seiner Farbfelder bestimmt werden, wobei die zweite Anzahl kleiner ist als die erste Anzahl, dass aus dem typischen Farbatlas und dem Vergleichsfarbatlas ein den aktuellen Druckbedingungen angepasster aktueller Farbatlas mit einer der ersten Anzahl gleichen dritten Anzahl von Farbfeldern berechnet wird, und dass die Ermittlung der erforderlichen Rasterprozentwerte anhand des aktuellen Farbatlas erfolgt.

19. Verfahren nach Anspruch 18, dadurch gekennzeichnet, dass aus dem typischen Farbatlas und dem Vergleichsfarbatlas ein Differenzfarbatlas mit einer der ersten Anzahl gleichen vierten Anzahl von Farbfeldern berechnet wird, und dass zur Berechnung des aktuellen Farbatlas der Differenzfarbatlas dem typischen Farbatlas überlagert wird.

20. Vorrichtung zur Ermittlung der für die Erzielung eines vorgegebenen Soll-Farborts erforderlichen Rasterprozentwerte der einzelnen Druckfarben im autotypischen Mehrfarbendruck mit einem Rechner, der mit einer Bedienungstastatur und einer Datenausgabevorrichtung sowie mit einem Programm- und einem Arbeitsspeicher ausgestattet ist, und mit einem an den Rechner angeschlossenen fotometrischen Messgerät, welches ein Remissionsspektrum und/oder Farbkoordinaten eines Messobjekts bestimmen und an den Rechner übergeben kann, wobei der Rechner Mittel aufweist, um die Farbkoordinaten gegebenenfalls aus dem Remissionsspektrum zu berechnen und die Farbkoordinaten zusammen mit den bekannten Rasterprozentwerten in gegenseitig zugeordneter Form zu speichern, wobei der Rechner ferner Mittel aufweist, mit denen die zu ermittelnden Rasterprozentwerte des vorgegebenen Soll-Farborts anhand der Soll-Farbkoordinaten des Soll-Farborts durch Zwischenwertbestimmung aus den gespeicherten Farbkoordinaten und den zugeordnet gespeicherten Rasterprozentwerten bestimmbar sind, dadurch gekennzeichnet, dass Mittel vorgesehen sind, um zunächst auf der Basis eines vorgewählten Rasterprozentwertes einer ausgewählten Druckfarbe einen neuen Farbatlas zu erstellen, welcher gegenüber dem ursprünglichen Farbatlas eine reduzierte Anzahl von Farbfeldern aufweist, wobei die Erstellung dieses neuen Farbatlas durch eine abstandsgewichtete Ausgleichsrechnungsmethode erfolgt, bei der der Zusammenhang zwischen den gespeicherten Rasterprozentwerten und den gespeicherten Farbkoordinaten der Farbfelder jeweils in der Umgebung des vorgewählten Rasterprozentwertes der ausgewählten Druckfarbe durch Näherungsfunktionen in der Weise angenähert wird, dass gegenüber dem vorgewählten Rasterprozentwert in der ausgewählten Druckfarbe einen grösseren Farbabstand aufweisende gespeicherte Farbkoordinaten mit einem geringeren Gewicht bei der Ausgleichsrechnung berücksichtigt werden als solche mit einem kleineren Farbabstand, und dass Mittel zur Zwischenwertbestimmung nach einer abstandsgewichteten Ausgleichsrechnungsmethode basierend auf dem neuen, reduzierte Farbatlas vorgesehen sind, bei welcher Ausgleichrechnungsmethode der Zusammenhang zwischen den gespeicherten Rasterprozentwerten und den gespeicherten Farbkoordinaten der Farbfelder in der Umgebung des Soll-Farborts durch Näherungsfunktionen in der Weise angenähert wird, dass gegenüber dem Soll-Farbort einen grösseren Farbabstand aufweisende gespeicherte Farbkoordinaten mit einem geringeren Gewicht bei der Ausgleichsrechnung berücksichtigt werden als solche mit einem kleineren Farbabstand, und wobei zur Bestimmung der Näherungsfunktionen alle Farbfelder des reduzierten Farbatlas verwendet werden.

21. Vorrichtung nach Anspruch 20, dadurch gekennzeichnet, dass der Rechner im fotometrischen Messgerät enthalten ist.

## Claims

1. Process for determining the half-tone percentages of the individual printing colours necessary to obtain a given target colour specification in autotype multicolour printing, in particular in four-colour offset printing using the printing colours cyan, magenta, yellow and black, by means of a colour atlas having a number of colour fields with known graduations in the half-tone percentages of the individual printing colours, whereby the colour specifications defined by colour co-ordinates of the colour fields are determined and, together with the known half-tone percentages of the colour fields, stored in reciprocally associated form and the half-tone percentages to be found for the given target colour specifications are determined on the basis of the target colour co-ordinates of the target colour specification by interpolation from the stored colour co-ordinates and the associated stored half-tone percentages of the colour fields, characterized in that a new colour atlas is first produced on the basis of a preselected half-tone percentage of a preselected printing colour, which new colour atlas has a smaller number of colour fields relative to the original colour atlas, whereby the production of this new colour atlas takes place by means of a difference-weighted best-fit calculation method in which an approximation is respectively obtained for the relationship between the stored half-tone percentages and the stored colour co-ordinates of the colour fields in the vicinity of the preselected half-tone percentage of the selected printing colour by approximation functions in such a way that, relative to the preselected half-tone percentage in the selected printing colour, stored colour co-ordinates having a larger colour difference are taken into account with a lower weighting in the best-fit calculation as compared with those having a smaller colour difference and in that, on the basis of this new and smaller colour atlas, the interpolation is carried out in accordance with a difference-weighted best-fit calculation method in which an approximation for the relationship between the stored half-tone percentages and the stored colour co-ordinates of the colour fields is obtained in the vicinity of the target colour specification by approximation functions in such a way that, as compared with the target colour specification, stored colour co-ordinates having a larger colour difference are taken into account with lower weighting in the best-fit calculation, as compared with those with a smaller colour difference and whereby all the colour fields of the smaller colour atlas are used to determine the approximation functions.

2. Process according to Claim 1, characterized in that the weighting with which the stored colour co-ordinates of the individual colour fields enter the best-fit calculation method is selected in accordance with the equation $G_i = 1/(\Delta E_i)^9$, where $G_i$ is the respective weighting and $\Delta E_i$ is the colour difference between the respective colour field and the target colour specification and where g is an empirical exponent in the range between 0.5 and 7 and preferably between 1 and 3.

3. Process according to Claim 1 or 2, characterized in that in four-colour printing, the half-tone percentage to be found for a selected printing colour, in particular black, is preselected and in that the half-tone percentages to be found for the other three printing colours are determined by taking account of the preselected half-tone percentage of the selected printing colour.

4. Process according to Claim 3, characterized in that new colour co-ordinates and associated new half-tone percentages are calculated from the stored colour co-ordinates and half-tone percentages of the colour fields and from the preselected half-tone percentage of the selected printing colour in accordance with a preferably difference-weighted best-fit calculation method in such a way that all the associated new half-tone percentages of the selected printing colour are equal to the preselected half-tone percentage and in that the half-tone percentages to be found for the other three printing colours are calculated from the new colour co-ordinates and new half-tone percentages.

5. Process according to Claim 4, characterized in that the half-tone percentage to be found for the selected printing colour is preselected as a variable parameter and is varied to satisfy an additional auxiliary condition, whereby the half-tone percentages to be found for the other three printing colours are respectively calculated for a new parameter value of the preselected half-tone percentage of the selected printing colour until the additional auxiliary condition is satisfied.

6. Process according to Claim 5, characterized in that, as the additional auxiliary condition, it is a requirement that the half-tone percentage to be found for the selected printing colour should be a maximum or a minimum.

7. Process according to Claim 4, characterized in that the half-tone percentage to be found for the selected printing colour is preselected as a maximum or a minimum, whereby the determination of the half-tone percentages to be found for the other three printing colours is repeated, beginning with a starting value for the half-tone percentage to be found for the selected printing colour, for various values of the half-tone percentage to be found for the selected printing colour until the half-tone percentage to be found for the selected printing colour has reached a final value at which, if it is respectively overshot or undershot, at least one of the half-tone percentages to be found for the other three printing colours would lie outside a permissible range of values.

8. Process according to Claim 5, characterized in that separate sets of colour co-ordinates are determined for the colour fields of the colour atlas for different types of light, in that the half-tone percentages to be found for the individual printing colours are calculated by using one of the separate sets of colour co-ordinates, in that - from these calculated half-tone percentages - the associated colour co-ordinates for the other types of light are calculated and in that, as an additional auxiliary condition, it is a requirement that the metamerism effect should be a minimum, the metamerism effect being expressed by the sum of the possibly weighted colour differences of the colour specifications defined by the colour co-ordinates calculated in this way for the other types of light relative to the target colour specifications for the current type of light.

9. Process according to one of the preceding claims, characterized in that the half-tone percentages determined for the individual printing colours are corrected in accordance with the relationship between nominal half-tone percentages and printing characteristics representing tonal value increments of the printing machine provided for the printing operation.

10. Process according to one of the preceding claims, characterized in that during the determination of the colour co-ordinates of the colour fields of the colour atlas, any possible deviation of the first substrate, on which the colour atlas is printed, from the second substrate, on which the given colour specification has to be printed, is also taken into account.

11. Process according to Claim 10, characterized in that the colour co-ordinates of the colour fields of the colour atlas are determined from the reflectance spectra of the colour fields and in that each spectral reflectance value of the reflectance spectra is multiplied by the quotient of the spectral reflectance value of the second substrate and the spectral reflectance value of the first substrate at the respective wavelength.

12. Process according to Claim 10, characterized in that the colour co-ordinates of the colour fields of the colour atlas are calculated from the reflectance spectra of the colour fields and the standard colour values calculated from them in accordance with CIE and in that each standard colour value is multiplied by the quotient of the relevant standard colour value of the second substrate and the relevant standard colour value of the first substrate.

13. Process according to Claim 4, characterized in that in the best-fit calculation used for the calculation of the new colour co-ordinates and the associated new half-tone percentages, an approximation is obtained for the relationship between the stored colour co-ordinates and the stored half-tone percentages of the colour fields in the vicinity of the preselected half-tone percentage of the selected printing colour by approximation functions in such a way that compared with the preselected half-tone percentage of the selected printing colour, stored half-tone percentages having a larger difference are taken into account with a lower weighting than those with a smaller difference.

14. Process according to Claim 13, characterized in that the weighting is selected to be inversely proportional to the difference.

15. Process according to one of the preceding claims, characterized in that the L*,a*, b* co-ordinates or the L*,u*,v* co-ordinates as specified by CIE are used as the colour co-ordinates.

**16.** Process according to Claim 4 or 5, characterized in that the half-tone percentage of the selected printing colour is preselected in accordance with a defined black build-up method.

**17.** Process according to one of the preceding claims, characterized in that a colour atlas is used whose colour fields are graduated for each printing colour in 3-10, preferably 4-6 and in particular 4-5, half-tone percentages.

**18.** Process according to one of the preceding claims, characterized in that under typical printing conditions, a typical colour atlas is produced with a first number of colour fields, whereby the colour co-ordinates of its colour fields are determined and, together with the associated known half-tone percentages of the individual printing colours, stored, in that under the current printing conditions provided for printing the given target colour specifications, a comparison colour atlas is produced with a second number of colour fields with known graduations in the half-tone percentages of the individual printing colours and the colour co-ordinates are determined for the colour fields of the comparison colour atlas, whereby the second number is smaller than the first number, in that a current colour atlas matched to the current printing conditions, and having a third number of colour fields equal to the first number, is calculated from the typical colour atlas and the comparison colour atlas and in that the determination of the necessary half-tone percentages takes place on the basis of the current colour atlas.

**19.** Process according to Claim 18, characterized in that a difference colour atlas, with a fourth number of colour fields equal to the first number, is calculated from the typical colour atlas and the comparison colour atlas and in that the difference colour atlas is superimposed on the typical colour atlas in order to calculate the current colour atlas.

**20.** Appliance for determining the half-tone percentages of the individual printing colours necessary for obtaining a given target colour specification in autotype multicolour printing, having a computer which is equipped with an operating keyboard and a data output appliance and with a program memory and a working memory, and having a photometric measuring unit connected to the computer, which photometric measuring unit can determine a reflectance spectrum and/or colour co-ordinates of a measurement object and transmit them to the computer, whereby the computer has means for calculating the colour co-ordinates, possibly from the reflectance spectrum, and for storing the colour co-ordinates together with the known half-tone percentages in a reciprocally associated form, whereby the computer also has means by which the half-tone percentages to be found for the given target colour specification can be determined on the basis of the target colour co-ordinates of the target colour specification by interpolation from the stored colour co-ordinates and the associated stored half-tone percentages, characterized in that means are provided to produce first, on the basis of a preselected half-tone percentage of a selected printing colour, a new colour atlas which has a smaller number of colour fields relative to the original colour atlas, whereby the production of this new colour atlas takes place by means of a difference-weighted best-fit calculation method in which an approximation is respectively obtained for the relationship between the stored half-tone percentages and the stored colour co-ordinates of the colour fields in the vicinity of the preselected half-tone percentage of the selected printing colour by approximation functions in such a way that, relative to the preselected half-tone percentage in the selected printing colour, stored colour co-ordinates having a larger colour difference are taken into account with a lower weighting in the best-fit calculation as compared with those having a smaller colour difference and in that means are provided for the interpolation in accordance with a difference-weighted best-fit calculation method based on the new, smaller colour atlas, in which best-fit calculation method an approximation is obtained for the relationship between the stored half-tone percentages and the stored colour co-ordinates of the colour fields in the vicinity of the target colour specification by means of approximation functions in such a way that, as compared with the target colour specification, stored colour co-ordinates having a larger colour difference are taken into account with a lower weighting in the best-fit calculation as compared with those with a smaller colour difference and whereby all the colour fields of the smaller colour atlas are used to determine the approximation functions.

**21.** Appliance according to Claim 20, characterized in that the computer is contained in the photometric measuring unit.

**Revendications**

**1.** Procédé pour déterminer les pourcentages de points de trame, nécessaires pour obtenir une position prescrite d'une couleur dans l'espace chromatique, des différentes couleurs d'impression dans une impression en plusieurs couleurs en similigravure, en particulier en impression offset en quatre couleurs avec les couleurs d'impression cyan/bleu-vert, magenta/pourpre, jaune et noir, à l'aide d'un atlas des couleurs comportant un certain nombre de champs colorés de pourcentages de points de trame, échelonnés, connus, des différentes couleurs d'impression, procédé dans lequel les positions prescrites des champs colorés dans l'espace chromatique, définies par des coordonnées chromatiques, sont déterminées et mémorisées, sous forme mutuellement associée avec les pourcentages de points de trame connus des champs colorés, et dans lequel les pourcentages de points de trame, à déterminer, de la position prescrite d'une couleur dans l'espace chromatique sont déterminés à l'aide des coordonnées chromatiques prescrites de la position prescrite d'une couleur dans l'espace chromatique par détermination d'une valeur intermédiaire à partir des coordonnées chromatiques mémorisées et des pourcentages de points de trame mémorisés, associés, des champs colorés, caractérisé par le fait que l'on établit tout d'abord, sur la base d'un pourcentage de points de trame présélectionné d'une couleur d'impression sélectionnée, un nouvel atlas des couleurs qui, par rapport à l'atlas des couleurs traditionnel présente un nombre réduit de champs colorés, l'établissement de ce nouvel atlas des couleurs se faisant par une méthode de calcul d'ajustement à pondération des distances dans le cas de laquelle, au moyen de fonctions d'approximation, on détermine approximativement la relation entre les pourcentages de points de trame mémorisés et les coordonnées chromatiques mémorisées des champs colorés, chaque fois au voisinage du pourcentage de points de trame présélectionné de la couleur d'impression sélectionnée, de façon que des coordonnées chromatiques, mémorisées, présentant une plus grande distance chromatique par rapport au pourcentage de points de trame présélectionné dans la couleur d'impression sélectionnée, soient prises en compte, lors du calcul d'ajustement, avec un poids plus faible que celles qui présentent une plus faible distance chromatique, et par le fait qu'en se basant sur ce nouvel atlas des couleurs réduit, on procède à la détermination de la valeur intermédiaire selon une méthode de calcul d'ajustement à pondération des distances dans le cas de laquelle on détermine approximativement, par des fonctions d'approximation, la relation entre les pourcentages de points de trame mémorisés et les coordonnées chromatiques mémorisées des champs colorés au voisinage de la position prescrite d'une couleur dans l'espace chromatique de façon que les coordonnées chromatiques, mémorisées, présentant une plus grande distance par rapport à la position prescrite de la couleur dans l'espace chromatique, soient prises en compte, lors du calcul d'ajustement, avec un poids plus faible que celles présentant une plus faible distance chromatique, et procédé dans lequel, pour déterminer les fonctions d'approximation, on emploie tous les champs colorés de l'atlas des couleurs réduit.

2. Procédé selon la revendication 1, caractérisé par le fait que l'on sélectionne le poids avec lequel les coordonnées chromatiques mémorisées des différents champs colorés entrent dans le calcul d'ajustement selon la formule $G_i = 1/(\Delta E_i)^g$, $G_i$ étant le poids en question et $\Delta E_i$ étant la distance chromatique entre le champ coloré en question et la position prescrite de la couleur dans l'espace chromatique et g étant un exposant empirique valant de 0,5 à 7, de préférence de 1 à 3.

3. Procédé selon la revendication 1 ou 2, caractérisé par le fait que, dans l'impression en quatre couleurs, on présélectionne le pourcentage de points de trame, à déterminer, d'une couleur d'impression sélectionnée, en particulier le noir, et que l'on détermine les pourcentages de points de trame, à déterminer, des trois autres couleurs d'impression en tenant compte du pourcentage de points de trame présélectionné de la couleur d'impression sélectionnée.

4. Procédé selon la revendication 3, caractérisé par le fait qu'à partir des coordonnées chromatiques mémorisées et des pourcentages de points de trame des champs colorés et à partir du pourcentage de points de trame présélectionné de la couleur d'impression sélectionnée, on calcule, selon une méthode de calcul d'ajustement de préférence à pondération des distances, de nouvelles coordonnées chromatiques et de nouveaux pourcentages de points de trame associés, de façon que tous les nouveaux pourcentages de points de trame associés de la couleur d'impression sélectionnée soient égaux au pourcentage de points de trame présélectionné, et par le fait que l'on calcule les pourcentages de points de trame, à déterminer, des trois autres couleurs d'impression à partir des nouvelles coordonnées chromatiques et des nouveaux pourcentages de points de trame.

5. Procédé selon la revendication 4, caractérisé par le fait que l'on présélectionne le pourcentages de points de trame, à déterminer, de la couleur d'impression sélectionnée en tant que paramètre variable et qu'on le fait varier pour remplir une condition secondaire supplémentaire, procédé dans lequel on calcule les pourcentages de points de trame, à déterminer, des trois autres couleurs d'impression, pour chacune des nouvelles valeurs de variation du pourcentages de points de trame présélectionné de la couleur d'impression sélectionnée jusqu'à ce que la condition secondaire supplémentaire soit remplie.

6. Procédé selon la revendication 5, caractérisé par le fait que, comme condition secondaire supplémentaire, on demande que le pourcentages de points de trame, à déterminer, de la couleur d'impression sélectionnée soit maximal ou minimal.

7. Procédé selon la revendication 4, caractérisé par le fait que l'on présélectionne le pourcentages de points de trame, à déterminer, de la couleur d'impression sélectionnée comme maximal ou minimal, procédé dans lequel, en partant d'une valeur initiale pour le pourcentage de points de trame, à déterminer, de la couleur d'impression sélectionnée, on répète la détermination des pourcentages de points de trame, à déterminer, des trois autres couleurs d'impression pour différentes valeurs du pourcentages de points de trame, à déterminer, de la couleur d'impression sélectionnée jusqu'à ce que le pourcentage de points de trame, à déterminer, de la couleur d'impression sélectionnée atteigne une valeur finale en cas de dépassement, par valeur supérieure ou par valeur inférieure de laquelle au moins l'un des pourcentages de points de trame, à déterminer, des trois autres couleurs d'impression se situerait en dehors d'une plage de valeurs autorisée.

8. Procédé selon la revendication 5, caractérisé par le fait que, pour les champs colorés de l'atlas des couleurs, on détermine des ensembles distincts de coordonnées chromatiques pour des modes d'éclairement différents, que l'on calcule les pourcentages de points de trame, à déterminer, des différentes couleurs d'impression à l'aide de l'un des jeux distincts de coordonnées chromatiques, qu'à partir des pourcentages de points de trame calculés on calcule les coordonnées chromatiques associées pour les autres modes d'éclairement et que comme condition auxiliaire supplémentaire on demande que l'effet métamérie exprimé par la somme des distances chromatiques, éventuellement pondérées, entre les positions, définies dans l'espace chromatique par les coordonnées chromatiques, ainsi calculées, des autres modes d'éclairement et les positions, prescrites dans l'espace chromatique, du mode d'éclairement en question soit minimal.

9. Procédé selon l'une des revendications précédentes, caractérisé par le fait que l'on corrige les pourcentages de points de trame, déterminés, des différentes couleurs d'impression en fonction des caractéristiques d'impression, représentant la relation entre des pourcentages de points de trame nominaux et des accroissements de tonalité pour la presse à imprimer prévue pour l'impression.

10. Procédé selon l'une des revendications précédentes, caractérisé par le fait que lors de la détermination des coordonnées chromatiques des champs colorés de l'atlas des couleurs, on tient compte d'un éventuel écart entre le premier substrat, sur lequel est imprimé l'atlas des couleurs, et le second substrat, sur lequel on doit imprimer la position prescrite de l'espace chromatique.

11. Procédé selon la revendication 10, caractérisé par le fait que l'on détermine les coordonnées chromatiques des champs colorés de l'atlas des couleurs à partir des spectres de réflexion diffuse des champs colorés et que l'on multiplie chaque valeur de réflexion diffuse spectrale des spectres de réflexion diffuse par le quotient de la valeur de la réflexion diffuse spectrale du second substrat par la valeur de la réflexion diffuse spectrale du premier substrat pour la longueur d'onde en question.

12. Procédé selon la revendication 10, caractérisé par le fait que l'on calcule les coordonnées chromatiques des champs colorés de l'atlas des couleurs à partir des spectres de réflexion diffuse des champs colorés et des valeurs chromatiques normalisées, calculées selon la Commission Internationale de l'Éclairage CIE et que l'on multiplie chaque valeur chromatique normalisée par le quotient de la valeur chromatique normalisée en question du second substrat par la valeur chromatique normalisée en question du premier substrat.

13. Procédé selon la revendication 4, caractérisé par le fait que lors du calcul d'ajustement pour le calcul des nouvelles coordonnées chromatiques et des nouveaux pourcentages de points de trame associés, on détermine approximativement, au moyen de fonctions d'approximation, la relation entre les coordonnées chromatiques mémorisées et les pourcentages de points de trame, mémorisés, des champs colorés au voisinage du pourcentage de points de trame, présélectionné, de la couleur d'impression sélectionnée de façon que des pourcentages de points de trame, mémorisés, présentant une plus grande différence par rapport au pourcentage de points de trame, présélectionné, de la couleur d'impression sélectionnée, soient pris en compte avec un poids moindre que ceux qui présentent une plus faible différence.

14. Procédé selon la revendication 13, caractérisé par le fait que l'on choisit le poids de façon inversement proportionnelle à la distance.

15. Procédé selon l'une des revendications précédentes, caractérisé par le fait que comme coordonnées chromatiques, on emploie les coordonnées L*, a*, b* ou les coordonnées L*, u*, v* selon la Commission Internationale de l'Éclairage CIE.

16. Procédé selon la revendication 4 ou 5, caractérisé par le fait que l'on présélectionne le pourcentage de points de trame de la couleur d'impression sélectionnée en fonction d'une méthode de constitution du noir définie.

**17.** Procédé selon l'une des revendications précédentes, caractérisé par le fait que l'on emploie un atlas de couleurs dont les champs colorés sont, pour chaque couleur d'impression, échelonnés en 3-10, de préférence 4-6, en particulier 4-5 pourcentages de points de trame différents.

**18.** Procédé selon l'une des revendications précédentes, caractérisé par le fait que, dans des conditions d'impression typiques, on établit un atlas des couleurs typique comportant un premier nombre de champs colorés, que l'on détermine les coordonnées chromatiques de ses champs colorés et qu'on le mémorise avec les pourcentages de points de trame connus, associés, des différentes couleurs d'impression, que, dans les conditions d'impression réelles prévues pour l'impression de la position prescrite dans l'espace chromatique, on établit un atlas des couleurs de comparaison comportant un second nombre de champs colorés, de pourcentage de points de trame échelonnés connus, des différentes couleurs d'impression et que l'on détermine les coordonnées chromatiques de ses champs colorés, le second nombre étant inférieur au premier nombre, qu'à partir de l'atlas des couleurs typique et de l'atlas des couleurs de comparaison, on calcule un atlas des couleurs réel, adapté aux conditions d'impression réelles, comportant un troisième nombre de champs colorés égal au premier nombre, et que la détermination des pourcentages de points de trame nécessaires se fait à l'aide de l'atlas des couleurs réel.

**19.** Procédé selon la revendication 18, caractérisé par le fait qu'à partir de l'atlas des couleurs typique et de l'atlas des couleurs de comparaison on calcule un atlas des différences de couleur comportant un quatrième nombre, égal au premier nombre, de champs colorés et que, pour le calcul de l'atlas des couleurs réel, on superpose à l'atlas des couleurs typique l'atlas des différences de couleur.

**20.** Dispositif pour déterminer les pourcentages de points de trame, nécessaires pour obtenir une position prescrite d'une couleur dans l'espace chromatique, des différentes couleurs d'impression en impression en plusieurs couleurs en similigravure, comportant un ordinateur qui est équipé d'un clavier de manoeuvre et d'un dispositif d'édition des données ainsi que d'une mémoire de programme et d'une mémoire de travail, ainsi que d'un appareil de mesure photométrique qui est relié à l'ordinateur et qui peut déterminer un spectre de réflexion diffuse et/ou des coordonnées chromatiques d'un objet de mesure et les transférer à l'ordinateur, dispositif dans le cas duquel l'ordinateur présente des moyens pour calculer éventuellement les coordonnées chromatiques à partir du spectre de réflexion diffuse et pour mémoriser, sous forme mutuellement associée, les coordonnées chromatiques avec les pourcentages de points de trame connus, dans le cas duquel l'ordinateur présente en outre des moyens à l'aide desquels on peut déterminer les pourcentages de points de trame, à déterminer, de la position prescrite dans l'espace chromatique à l'aide des coordonnées chromatiques prescrites de la position prescrite dans l'espace chromatique, par détermination d'une valeur intermédiaire à partir des coordonnées chromatiques mémorisées et des pourcentages de points de trame, mémorisés associés, caractérisé par le fait que des moyens sont prévus pour établir tout d'abord, sur la base d'un pourcentage de points de trame présélectionné d'une couleur d'impression sélectionnée, un nouvel atlas des couleurs qui, par rapport à l'atlas des couleurs d'origine, présente un nombre réduit de champs colorés, étant précisé que l'établissement de ce nouvel atlas des couleurs se fait par une méthode de calcul d'ajustement à pondération des distances, dans le cas de laquelle, au moyen de fonctions d'approximation, on détermine approximativement la relation entre les pourcentages de points de trame mémorisés et les coordonnées chromatiques mémorisées des champs colorés, chaque fois au voisinage du pourcentage de points de trame présélectionné de la couleur d'impression sélectionnée, de façon que des coordonnées chromatiques, mémorisées, présentant une plus grande distance chromatique par rapport au pourcentage de points de trame présélectionné dans la couleur d'impression sélectionné, soient prises en compte, lors du calcul d'ajustement, avec un poids plus faible que celles qui présentent une plus faible distance chromatique et par le fait que sont prévus des moyens pour la détermination d'une valeur intermédiaire, selon une méthode de calcul d'ajustement pondéré en distance, en se basant sur le nouvel atlas des couleurs réduit, méthode de calcul d'ajustement dans le cas de laquelle on calcule approximativement la relation entre les pourcentages de points de trame mémorisés et les coordonnées chromatiques mémorisées des champs colorés au voisinage de la position prescrite d'une couleur dans l'espace chromatique de façon que les coordonnées chromatiques, mémorisées, présentant une plus grande distance par rapport à la position prescrite de la couleur dans l'espace chromatique, soient prises en compte, lors du calcul d'ajustement, avec un poids plus faible que celles présentant une plus faible distance chromatique, et procédé dans lequel, pour déterminer les fonctions d'approximation, on emploie tous les champs colorés de l'atlas des couleurs réduit.

**21.** Dispositif selon la revendication 20, caractérisé par le fait que l'ordinateur est contenu dans l'appareil de mesure photométrique.

Fig.1

```
┌─────────────────────────┐
│   Rezepturberechnung    │
└─────────────────────────┘
              │
              ▼
┌────────────────────────────────────────────────────────────────────┐
│ Berechnung der Stützstellen des reduzierten Farbatlas anhand des     │
│ vorge-wählten Rasterprozentwerts der ausgewählten Druckfarbe mittels │
│ ab-standsgewichteter Ausgleichsrechnung                              │
└────────────────────────────────────────────────────────────────────┘
              │
              ▼
┌────────────────────────────────────────────────────────────────────┐
│ Farbabstandsgewichtete Ausgleichsrechnung mit den Stützstellen des   │
│ redu-zierten Farbatlas  und Berechnung der Näherungsfunktionen für   │
│ die Soll-Farbkoordinaten der vorgegebenen Soll-Farbe                 │
└────────────────────────────────────────────────────────────────────┘
              │
              ▼
┌────────────────────────────────────────────────────────────────────┐
│ Auflösung des  resultierenden nicht-linearen Gleichungssystems nach  │
│ den gesuchten Rasterprozentwerten der nicht ausgewählten Druckfarben.│
└────────────────────────────────────────────────────────────────────┘
              │
              ▼
┌────────────────────────────────────────────────────────────────────┐
│ Bereitstellung der dabei errechneten gesuchten Rasterprozentwerte    │
│ ($C_Z$, $M_Z$, $Y_Z$) und des vorgewählten Rasterprozentwerts        │
│ ($K_Z = K_V$) zur weiteren Verarbeitung bzw. Anzeige/Ausgabe         │
└────────────────────────────────────────────────────────────────────┘
              │
              ▼
         ┌─────────┐
         │  Ende   │
         └─────────┘
```

Fig. 2

Ausmessen des körperlichen Farbatlas

Eingeben oder Einlesen der Daten des körperlichen Farbatlas und Berechnen/ Speichern der Stützstellen des elektronischen Farbatlas, ggf. mit Korrekturen

Berechnung des aktuellen Farbatlas

Eingeben oder Einlesen der Soll-Farbkoordinaten der vorgegebenen Soll-Farbe

Vorgabe des Rasterprozentwerts der ausgewählten Druckfarbe

Rezeptur-Berechnung

Eingabe oder Berechnung eines neuen vorgewählten Rasterprozentwerts der ausgewählten Druckfarbe

ja

ja

$0 \leq C_Z, M_Z, Y_Z, \leq 100$ ?

nein

Wiederholen ?

nein

Korrekturen

Ausgabe
$C_Z, M_Z, Y_Z, K_Z$

nein

Abbrechen ?

ja

Berechnung der Rasterprozentwerte für minimalen Farbabstand

Abbruch-Meldung

Korrekturen

Ausgabe
$C_Z', M_Z', Y_Z', K_Z'$

Fig. 3

Auswahl der gewünschten
Druckfarbe, z.B. Schwarz

Startwert für den Rasterprozentwert der gewählten
Druckfarbe als Parameter,
z.B. $K_Z = K_V$

Rezeptur-Berechnung

Berechnung eines neuen
Parameterwerts in Richtung
Minimum/Maximum

nein ← $0 \leq C_Z, M_Z, Y_Z \leq 100?$ → ja

Speicherung von
$C_Z, M_Z, Y_Z, K_Z$

Korrekturen

Ausgabe der zuletzt gespeicherten Rasterprozentwerte $C_Z, M_Z, Y_Z, K_Z$

Fig. 4

Vorgabe des Rasterprozentwerts für Druckfarbe Schwarz
als
$$K = 0$$

↓

Rezepturberechnung
für $K = 0$

↓

Berechnung eines neuen
Rasterprozentwerts der Buntfarbe mit kleinstem Rasterprozentwert für $K = 0$ gemäss
definierter Schwarz-Aufbau-
Methode

↓

Rezepturberechnung mit dem
neuen Rasterprozentwert der Buntfarbe mit
kleinstem Rasterprozentwert
für $K = 0$ als vorgewähltem
Rasterprozentwert

··········→ Korrekturen
←··········

↓

Ausgabe

$C_Z$, $M_Z$, $Y_Z$, $K_Z$

Fig. 5

```
┌──────────────┐
│  Korrekturen │
└──────┬───────┘
       │
       ▼
┌─────────────────────────────────────────────┐
│ Berechnung der Tonwertzunahmen unter den     │
│ typischen Druckbedingungen                   │
└──────────────────┬──────────────────────────┘
                   │
                   ▼
┌─────────────────────────────────────────────┐
│ Berechnung des Interpolations-Polynoms       │
│ 3. Ordnung für die Druckkennlinien  der      │
│ typischen Druckbedingungen                   │
└──────────────────┬──────────────────────────┘
                   │
                   ▼
┌─────────────────────────────────────────────┐
│ Berechnung der Tonwertzunahmen unter         │
│ den aktuellen Druckbedingungen               │
└──────────────────┬──────────────────────────┘
                   │
                   ▼
┌─────────────────────────────────────────────┐
│ Berechnung des Interpolations-Polynoms       │
│ 3. Ordung für die Druckkennlinien der        │
│ aktuellen Druckbedingungen                   │
└──────────────────┬──────────────────────────┘
                   │
                   ▼
┌─────────────────────────────────────────────┐
│ Berechnung der korrigierten Rasterprozent-   │
│ werte aus den ermittelten Rasterprozentwerten│
│ und den Interpolations-Polynomen für die     │
│ Druckkennlinien der typischen und der        │
│ aktuellen Druckbedingungen                   │
└──────────────────┬──────────────────────────┘
                   │
                   ▼
              ┌─────────┐
              │  Ende   │
              └─────────┘
```

Fig. 6

Berechnung des aktuellen Farbatlas

Erstellen des Vergleichsfarbatlas

Berechnen des Differenzfarbatlas
aus dem typischen Farbatlas und
dem Vergleichsfarbatlas in den
Stützstellen des Vergleichsfarbatlas

Erweitern des Differenzfarbatlas auf
die Stützstellen des typischen Farbatlas durch lineare Interpolation aus
den Farbkoordinatendifferenzen an
den Stützstellen des Vergleichsfarbatlas

Berechnen des aktuellen Farbatlas
durch Addition des erweiterten
Differenzatlas zum typischen Farbatlas

Ende

Fig. 7

Fig.8a

$L_i, a_i, b_i$

$L_{i(j)}, a_{i(j)}, b_{i(j)}$

L,a,b

C,M,Y,K

i

j

Fig.8b

L,a,b

$L_j, a_j, b_j$

C,M,Y,K

j

Fig.8c

$\Delta L, \Delta a, \Delta b$

$\Delta L_j, \Delta a_j, \Delta b_j = L_j - L_i(j), a_j - a_i(j), b_j - b_i(j)$

C,M,Y,K

j

Fig.8d

$\Delta L, \Delta a, \Delta b$

$\Delta L_i, \Delta a_i, \Delta b_i$

$\Delta L_j, \Delta a_j, \Delta b_j$

C,M,Y,K

i

j

Fig.8e

L,a,b

$L_i + \Delta L_i, a_i + \Delta a_i, b_i + \Delta b_i$

$L_j, a_j, b_j$

$L_i, a_i, b_i$

C,M,Y,K

i

j